# EUROPEAN PATENT APPLICATION

(11) **EP 4 750 152 A1**
(43) Date of publication of application: **27.05.2026**
(21) Application number: 24853298.8
(22) Date of filing: 24.05.2024
(51) Int. Cl.: H04W 36/00

(54) **COMMUNICATION METHOD AND COMMUNICATION DEVICE**

(30) Priority: 11.08.2023 CN 202311017816
(71) Applicant: Huawei Technologies Co., Ltd., Shenzhen, Guangdong 518129 (CN)
(72) Inventor: ZHONG, Yaping, Shenzhen, Guangdong 518129 (CN); HU, Xingxing, Shenzhen, Guangdong 518129 (CN); LU, Rui, Shenzhen, Guangdong 518129 (CN)
(74) Representative: Goddar, Heinz J.
(86) International application number: PCT/CN2024/095168
(87) International publication number: WO 2025/035883

(57) **Abstract**

This application provides a communication method and a communication device, applicable to a random access channel less handover scenario. In the method, after receiving a handover request acknowledgement message, a source access network device can send, to at least one candidate access network device, indication information of at least one beam measured by a terminal device. In this way, resource utilization can be improved while flexibility of scheduling resources by an access network device is improved.

## Description

This application claims priority to Chinese Patent Application No. 202311017816.0, filed with the China National Intellectual Property Administration on August 11, 2023 and entitled "COMMUNICATION METHOD AND COMMUNICATION DEVICE", which is incorporated herein by reference in its entirety.

### TECHNICAL FIELD

Embodiments of this application relate to the communication field, and in particular, to a communication method and a communication device.

### BACKGROUND

A random access channel less (random access channel-less, RACH-LESS) procedure is an access procedure introduced in the long term evolution (long term evolution, LTE) release R14. When a terminal device receives a radio resource control (radio resource control, RRC) reconfiguration message delivered by a source access network device, if the RRC reconfiguration message includes an uplink resource pre-allocated by a target access network device to the terminal device, the terminal device may directly send RRC reconfiguration complete to the target access network device using the pre-allocated uplink resource, to acknowledge that handover is completed; or if the RRC reconfiguration message does not include an uplink resource pre-allocated by a target access network device to the terminal device, the terminal device monitors a physical downlink control channel (physical downlink control channel, PDCCH) of the target access network device, and obtains, from the PDCCH, an uplink resource dynamically allocated by the target access network device; and then the terminal device sends RRC reconfiguration complete to the target access network device using the dynamically allocated uplink resource indicated by the PDCCH, to acknowledge that handover is completed. Because the terminal device accesses the target access network device through RACH-less during the handover, the target access network device does not need to allocate a RACH resource to the terminal device, and the terminal device does not perform a random access channel procedure either, RACH-less not only helps save random access channel (random access channel, RACH) resources, but also shorten latency of accessing the target access network device by the terminal device after the handover.

The RACH-less procedure is also introduced in a new radio (new radio, NR) system. A procedure of configuring the uplink resource for the terminal device in an LTE system is reused in the NR system. Different from the LTE system, the NR system has the concept of beam. In uplink resource allocation of RACH-less, in one manner, at least one candidate access network device pre-allocates an uplink resource to the terminal device on all beams. In another manner, a candidate access network device sends a PDCCH to the terminal device on all beams, to ensure that the terminal device can obtain a dynamically allocated uplink resource through a PDCCH delivered on a specific beam. However, the behavior of blindly sending the PDCCH by the candidate access network device causes a waste of uplink resources.

Therefore, in a scenario with the use of the RACH-less procedure, how an access network device flexibly schedules resources for the terminal device to improve resource utilization is a currently discussed hot topic.

### SUMMARY

According to a first aspect, this application provides a communication method. The communication method may be performed by a source access network device, or may be performed by a component (for example, components such as a processor, a chip, or a chip system) of the source access network device. The source access network device is used as an example. The source access network device sends a handover request message to at least one candidate access network device; the source access network device receives a handover request acknowledgement message from the at least one candidate access network device; and the source access network device sends, to the at least one candidate access network device, indication information of at least one beam measured by the terminal device.

Optionally, the indication information of the at least one beam is used by the at least one candidate access network device to determine a beam for sending a physical downlink control channel PDCCH to the terminal device.

In this application, after receiving the handover request acknowledgement message, the source access network device can send, to the at least one candidate access network device, the indication information of the at least one beam measured by the terminal device. This helps report a latest beam measurement result to the at least one candidate access network device, and helps the candidate access network device determine, based on the indication information of the at least one beam, a beam, that is more suitable for the terminal device, for sending the PDCCH, instead of sending the PDCCH on each beam in a candidate cell of the candidate access network device. Therefore, while flexibility of scheduling a resource by the access network device is improved, a resource waste caused by a resource scheduling process can be reduced, and resource utilization can be improved.

In a possible implementation, each of the at least one beam meets any one of the following preset conditions:
the beam is a beam with optimal signal quality among beams measured by the terminal device; or
signal quality of the beam is greater than or equal to a reference threshold; or
signal quality of the beam is greater than or equal to signal quality of a reference beam, and the beam is different from the reference beam.

In this implementation, it is proposed that a beam indicated by the indication information of the at least one beam sent by the source access network device to the candidate access network device meets the preset condition. In other words, a beam sent by the source access network device to the candidate access network device is a beam with good signal quality. This helps the candidate access network device deliver the PDCCH on a proper beam based on the beam indication information. Therefore, when the beam that is in the candidate cell and that is measured by the terminal device changes, the beam for delivering the PDCCH can still be accurately determined, thereby improving delivery accuracy of a base station. In this way, the terminal device obtains an uplink resource by decoding the PDCCH in advance, thereby reducing a handover delay and improving handover efficiency.

In a possible implementation, the method further includes: The source access network device sends measurement configuration information to the terminal device, where the measurement configuration information indicates the terminal device to report indication information of a beam that meets the preset condition; and the source access network device receives the indication information of the at least one beam from the terminal device.

Optionally, the measurement configuration information includes indication information of the reference beam and/or the reference threshold.

Optionally, the measurement configuration information further includes an upper limit of a quantity of reported beams.

In a possible implementation, the indication information of the at least one beam includes an index of each of the at least one beam. For example, when the indication information of the at least one beam includes only the index of the beam, the access network device can determine, in another manner, a specific cell to which the beam belongs. For example, the access network device determines a cell identifier based on a measurement identifier corresponding to an index of the reported beam, to determine a specific cell to which the beam reported by the terminal device belongs.

Optionally, the indication information of the at least one beam further includes a cell identifier corresponding to each of the at least one beam. The cell identifier corresponding to the beam indicates a specific cell whose beam is measured by the terminal device, or a specific cell that is of a specific candidate access network device and to which the beam belongs. This helps the candidate access network device determine, based on the cell identifier in the indication information of the beam, a cell to which the beam belongs, thereby helping improve efficiency of scheduling a resource by the candidate access network device for the terminal device.

Optionally, the indication information of the at least one beam further includes signal quality information of each of the at least one beam. The signal quality information of the beam indicates signal quality of the beam. For example, the signal quality information of the beam may be any one of reference signal received power (reference signal received power, RSRP), reference signal received quality (reference signal received quality, RSRQ), or a signal to interference plus noise ratio (signal to interference plus noise ratio, SINR). This helps the candidate access network device select, based on the signal quality information, a beam with good signal quality for delivering the PDCCH, thereby improving efficiency of scheduling a resource by the candidate access network device for the terminal device.

In a possible implementation, the measurement configuration information is RRC layer measurement configuration information; or the measurement configuration information is physical layer measurement configuration information.

In a possible implementation, the method further includes: The source access network device sends a radio resource control RRC reconfiguration message to the terminal device, where the RRC reconfiguration message includes first indication information and indication information of a cell of the at least one candidate access network device, and the first indication information indicates the terminal device to perform a random access channel less RACH-less handover.

In a possible implementation, the handover request message includes indication information of at least one first beam measured by the terminal device.

Optionally, a beam indicated by the indication information of the at least one beam is different from a beam indicated by the indication information of the at least one first beam.

It may be understood that the source access network device sends the indication information of the at least one beam (referred to as indication information of a second beam set) to the candidate access network device, and then, when a beam in a same cell changes, the source access network device sends the indication information of the at least one first beam (referred to as indication information of a first beam set) to the candidate access network device. Compared with the indication information of the first beam set, the indication information of the second beam set is indication information of an updated beam or indication information of a new beam obtained after beam information that is of a neighboring cell and that is measured by a terminal changes. This helps the candidate access network device determine, based on indication information of at least one updated beam, a beam that is more suitable for sending the PDCCH to the terminal device, instead of determining, for the terminal device based on indication information of at least one first beam that may have expired or become invalid, a beam for sending the PDCCH. Therefore, this helps improve flexibility and accuracy of scheduling a resource by the candidate access network device, and improve efficiency of scheduling the uplink resource for the terminal device.

In a possible implementation, the reference beam is a beam determined by the source access network device based on the indication information of the at least one first beam.

In this implementation, it is proposed that the reference beam may be determined by the source access network device based on the indication information of the at least one first beam (namely, the indication information of the first beam set). This helps the terminal device report a beam with better quality than the reference beam when the source access network device configures the reference beam for the terminal device. In other words, the terminal device reports a beam better than the first beam set. This helps the candidate access network device determine, based on indication information of at least one updated beam, a beam that is more suitable for sending the PDCCH to the terminal device, instead of determining, for the terminal device based on indication information of at least one first beam that may have expired or become invalid, a beam for sending the PDCCH.

According to a second aspect, this application provides a communication method. The communication method may be performed by a terminal device, or may be performed by a component (for example, components such as a processor, a chip, or a chip system) of the terminal device. The terminal device is used as an example. The terminal device sends indication information of at least one beam to a source access network device. The indication information of the at least one beam is used by at least one candidate access network device to determine a beam for sending a PDCCH to the terminal device, and the candidate access network device is an access network device configured by the source access network device in an RRC reconfiguration message of the terminal device.

In this application, the terminal device can send the indication information of the at least one beam to the source access network device, so that after receiving a handover request acknowledgement message, the source access network device can send, to the at least one candidate access network device, indication information of at least one beam measured by the terminal device. This helps report a latest beam measurement result measured by the terminal device to the at least one candidate access network device, and helps the candidate access network device determine, based on the indication information of the at least one beam, a beam, that is more suitable for the terminal device, for sending the PDCCH, instead of sending the PDCCH on each beam in a candidate cell of the candidate access network device. Therefore, while flexibility of scheduling a resource by the access network device is improved, a resource waste caused by a resource scheduling process can be reduced.

In a possible implementation, each of the at least one beam meets any one of the following preset conditions:
the beam is a beam with optimal signal quality among beams measured by the terminal device; or
signal quality of the beam is greater than or equal to a reference threshold; or
signal quality of the beam is greater than or equal to signal quality of a reference beam, and the beam is different from the reference beam.

In a possible implementation, the method further includes: The terminal device receives measurement configuration information from the source access network device. The measurement configuration information indicates the terminal device to report indication information of a beam that meets the preset condition.

Optionally, the measurement configuration information includes indication information of the reference beam and/or the reference threshold.

Optionally, the measurement configuration information further includes an upper limit of a quantity of reported beams.

In a possible implementation, the indication information of the at least one beam includes an index of each of the at least one beam.

Optionally, the indication information of the at least one beam further includes a cell identifier corresponding to each of the at least one beam, and/or signal quality information of each of the at least one beam.

In a possible implementation, the measurement configuration information is RRC layer measurement configuration information; or the measurement configuration information is physical layer measurement configuration information.

In a possible implementation, the method further includes: The terminal device receives an RRC reconfiguration message from the source access network device. The RRC reconfiguration message includes first indication information and cell information of the at least one candidate access network device, and the first indication information indicates the terminal device to perform a RACH-less handover.

In a possible implementation, the method further includes:
The terminal device triggers a handover to a target cell of a target access network device, where the target access network device is one of the at least one candidate access network device; and the terminal device monitors a PDCCH on a beam that belongs to the target cell in the at least one beam, where the PDCCH indicates an uplink resource allocated to the terminal device.

In a possible implementation, before the terminal device sends the indication information of the at least one beam to the source access network device, the method further includes: The terminal device sends indication information of at least one first beam to the source access network device.

In a possible implementation, a beam indicated by the indication information of the at least one beam is different from a beam indicated by the indication information of the at least one first beam.

It should be noted that there are further a plurality of other specific implementations in this embodiment of this application. For details, refer to the specific implementations of the first aspect and beneficial effects thereof. Details are not described herein again.

According to a third aspect, this application provides a communication method. The communication method may be performed by a candidate access network device, or may be performed by a component (for example, components such as a processor, a chip, or a chip system) of the candidate access network device. The candidate access network device is used as an example. The candidate access network device receives a handover request message from a source access network device; the candidate access network device sends a handover request acknowledgement message to the source access network device; the candidate access network device receives, from the source access network device, indication information of at least one beam measured by a terminal device; and the candidate access network device sends a PDCCH to the terminal device based on the indication information of the at least one beam.

Optionally, the terminal device is a terminal device that performs a RACH-less handover.

In this application, after sending the handover request acknowledgement message, the candidate access network device can receive the indication information that is of the at least one beam and that is sent by the source access network device. The indication information of the at least one beam can reflect a latest beam measurement result, and the at least one beam may be understood as an optimal beam of the terminal device. Further, the candidate access network device determines, based on the indication information of the at least one beam, a beam, that is more suitable for the terminal device, for sending the PDCCH, instead of sending the PDCCH on each beam in a candidate cell of the candidate access network device. Therefore, while flexibility of scheduling a resource by the access network device is improved, a resource waste caused by a resource scheduling process can be reduced.

In a possible implementation, that the candidate access network device sends the PDCCH to the terminal device based on the indication information of the at least one beam includes: The candidate access network device sends the PDCCH on a beam that belongs to a cell of the candidate access network device in the indication information of the at least one beam. The PDCCH indicates an uplink resource allocated to the terminal device.

In a possible implementation, the indication information of the at least one beam includes an index of each of the at least one beam.

Optionally, the indication information of the at least one beam further includes a cell identifier corresponding to each of the at least one beam, and/or signal quality information of each of the at least one beam.

In a possible implementation, the handover request message includes indication information of at least one first beam measured by the terminal device.

In a possible implementation, a beam indicated by the indication information of the at least one beam is different from a beam indicated by the indication information of the at least one first beam.

It should be noted that there are further a plurality of other specific implementations in this embodiment of this application. For details, refer to the specific implementations of the first aspect and beneficial effects thereof. Details are not described herein again.

According to a fourth aspect, this application provides a communication method. The communication method may be performed by a terminal device, or may be performed by a component (for example, components such as a processor, a chip, or a chip system) of the terminal device. The terminal device is used as an example. The terminal device receives first indication information and resource configuration information, where the first indication information indicates the terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, the third beam set includes at least one beam, and the fourth beam set includes at least one beam; and the terminal device determines, based on the resource configuration information, a target beam and/or an uplink resource corresponding to the target beam from at least one measured beam.

It may be understood that the resource configuration information is used to configure a pre-allocated uplink resource corresponding to a part of beams in the candidate cell, and indicates a dynamically allocated uplink resource indicated by delivering the PDCCH on the other part of beams in the candidate cell. It may also be understood that the resource configuration information indicates a specific beam that is in the candidate cell and on which the terminal device uses the pre-allocated uplink resource, and a beam that is in the candidate cell and on which the terminal device monitors the PDCCH to obtain the dynamically allocated uplink resource.

In this application, the terminal device can receive the first indication information and the resource configuration information, and the resource configuration information configures a plurality of uplink grant manners for the terminal device in a candidate cell. In other words, in a candidate cell, a third beam set for which the pre-allocated uplink resource is used is configured, and a fourth beam set for indicating the dynamically allocated uplink resource by delivering the PDCCH is indicated. Therefore, this helps improve flexibility of using the uplink resource by the terminal device. In addition, compared with a conventional technology in which a candidate access network device configures a pre-allocated uplink resource for each beam in a candidate cell, the solution in this embodiment reduces a quantity of to-be-configured pre-allocated uplink resources, and helps reduce a resource waste.

In a possible implementation, the resource configuration information includes one or more of the following: indication information of the third beam set, information about a pre-allocated uplink resource corresponding to each beam in the third beam set, a mapping relationship between the beam in the third beam set and the pre-allocated uplink resource, and indication information of the fourth beam set. The indication information of the third beam set includes an index of each beam in the third beam set, and the indication information of the fourth beam set includes an index of each beam in the fourth beam set. The information about the pre-allocated uplink resource corresponding to each beam in the third beam set includes time-frequency domain position information of the pre-allocated uplink resource corresponding to each beam.

It should be noted that the mapping relationship between the beam in the third beam set and the pre-allocated uplink resource may be explicitly carried in the resource configuration information, or may be implicitly carried in the resource configuration information. For example, the mapping relationship between the beam in the third beam set and the pre-allocated uplink resource may be implicitly indicated based on the indication information of the third beam and the information about the pre-allocated uplink resource corresponding to each beam in the third beam set.

In a possible implementation, that the terminal device determines, based on the resource configuration information, the target beam and/or the uplink resource corresponding to the target beam from the at least one measured beam includes: If at least one beam that is in the candidate cell and that is measured by the terminal device belongs to the third beam set, the terminal device determines one of the at least one beam as the target beam, and determines that a pre-allocated uplink resource corresponding to the target beam is the uplink resource corresponding to the target beam.

In a possible implementation, that the terminal device determines, based on the resource configuration information, the target beam and/or the uplink resource corresponding to the target beam from the at least one measured beam includes: If at least one beam that is in the candidate cell and that is measured by the terminal device belongs to the fourth beam set, the terminal device determines one of the at least one beam as the target beam, and monitors the PDCCH on the target beam. A dynamically allocated uplink resource indicated by the PDCCH is the uplink resource corresponding to the target beam.

In a possible implementation, that the terminal device determines, based on the resource configuration information, the target beam and/or the uplink resource corresponding to the target beam from the at least one measured beam includes: If at least one beam that is in the candidate cell and that is measured by the terminal device belongs to the third beam set, and at least one beam that is in the candidate cell and that is measured by the terminal device belongs to the fourth beam set, the terminal device determines one beam in the third beam set as the target beam, and determines that a pre-allocated uplink resource corresponding to the target beam is the uplink resource corresponding to the target beam.

In a possible implementation, the resource configuration information further includes information about a random access channel RACH resource; and that the terminal device determines, based on the resource configuration information, the target beam and/or the uplink resource corresponding to the target beam from the at least one measured beam includes: If at least one beam that is in the candidate cell and that is measured by the terminal device does not belong to the third beam set and does not belong to the fourth beam set, the terminal device determines one of the at least one beam as the target beam, and triggers a random access channel procedure on the RACH resource.

In a possible implementation, the resource configuration information further includes second indication information, and the second indication information indicates the terminal device to preferentially use the pre-allocated uplink resource; and that the terminal device determines, based on the resource configuration information, the target beam and/or the uplink resource corresponding to the target beam from the at least one measured beam includes: If at least one beam that is in the candidate cell and that is measured by the terminal device belongs to the third beam set, and at least one beam in the candidate cell belongs to the fourth beam set, the terminal device determines a beam in the third beam set as the target beam, and determines that a pre-allocated uplink resource corresponding to the target beam is the uplink resource corresponding to the target beam.

In a possible implementation, the resource configuration information further includes third indication information, and the third indication information indicates the terminal device to preferentially obtain a dynamically allocated uplink resource by monitoring the PDCCH; and that the terminal device determines, based on the resource configuration information, the target beam and/or the uplink resource corresponding to the target beam from the at least one measured beam includes: If at least one beam that is in the candidate cell and that is measured by the terminal device belongs to the third beam set, and at least one beam in the candidate cell belongs to the fourth beam set, the terminal device determines one of the at least one beam that belongs to the fourth beam set as the target beam, and monitors the PDCCH on the target beam, where a dynamically allocated uplink resource indicated by the PDCCH is the uplink resource corresponding to the target beam.

In a possible implementation, the resource configuration information further includes a first threshold corresponding to the pre-allocated uplink resource; and that the terminal device determines one of the at least one beam as the target beam includes: The terminal device determines a beam with signal quality greater than or equal to the first threshold in the at least one beam as the target beam.

In a possible implementation, the resource configuration information further includes a second threshold corresponding to the dynamically allocated uplink resource indicated by the PDCCH; and that the terminal device determines one of the at least one beam as the target beam includes: The terminal device determines a beam with signal quality greater than or equal to the second threshold in the at least one beam as the target beam.

In a possible implementation, the resource configuration information further includes a third threshold corresponding to each beam in the third beam set; and that the terminal device determines one of the at least one beam as the target beam includes: The terminal device determines a beam with signal quality greater than or equal to a third threshold corresponding to the beam in the at least one beam as the target beam.

In a possible implementation, the resource configuration information further includes a fourth threshold corresponding to each beam in the fourth beam set; and that the terminal device determines one of the at least one beam as the target beam includes: The terminal device determines a beam with signal quality greater than or equal to a fourth threshold corresponding to the beam in the at least one beam as the target beam.

In a possible implementation, the resource configuration information further includes information about a random access channel RACH resource.

That the terminal device determines, based on the resource configuration information, the target beam and/or the uplink resource corresponding to the target beam from the at least one measured beam includes: The terminal device determines a beam with optimal signal quality in the at least one measured beam in the candidate cell as the target beam; and if the target beam belongs to the third beam set, the terminal device determines that a pre-allocated uplink resource corresponding to the target beam is the uplink resource corresponding to the target beam; or if the target beam belongs to the fourth beam set, the terminal device monitors the PDCCH on the target beam, where a dynamically allocated uplink resource indicated by the PDCCH is the uplink resource corresponding to the target beam; or if the target beam does not belong to the third beam set and does not belong to the fourth beam set, the terminal device triggers a random access channel procedure on the target beam on the RACH resource.

According to a fifth aspect, this application provides a communication method. The communication method may be performed by a candidate access network device, or may be performed by a component (for example, components such as a processor, a chip, or a chip system) of the candidate access network device. The candidate access network device is used as an example. The candidate access network device sends first indication information and resource configuration information. The first indication information indicates a terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, the third beam set includes at least one beam, and the fourth beam set includes at least one beam.

In this application, the candidate access network device can configure a plurality of uplink grant manners for the terminal device in a candidate cell. In other words, in a candidate cell, a third beam set for which the pre-allocated uplink resource is used is configured, and a fourth beam set for indicating the dynamically allocated uplink resource by delivering the PDCCH is indicated. Therefore, this helps improve flexibility of configuring the uplink resource by the candidate access network device. In addition, compared with a conventional technology in which a candidate access network device configures a pre-allocated uplink resource for each beam in a candidate cell, the solution in this embodiment reduces a quantity of to-be-configured pre-allocated uplink resources, and helps reduce a resource waste.

In a possible implementation, the resource configuration information includes indication information of the third beam set, information about a pre-allocated uplink resource corresponding to each beam in the third beam set, and indication information of the fourth beam set.

In a possible implementation, the resource configuration information further includes information about a random access channel RACH resource.

In a possible implementation, the resource configuration information further includes a first threshold corresponding to the pre-allocated uplink resource, and/or a second threshold corresponding to the dynamically allocated uplink resource indicated by the PDCCH.

In a possible implementation, the resource configuration information further includes a third threshold corresponding to each beam in the third beam set and/or a fourth threshold corresponding to each beam in the fourth beam set.

In a possible implementation, the resource configuration information further includes second indication information, and the second indication information indicates the terminal device to preferentially use the pre-allocated uplink resource.

In a possible implementation, the resource configuration information further includes third indication information, and the third indication information indicates the terminal device to preferentially obtain a dynamically allocated uplink resource by monitoring the PDCCH.

In a possible implementation, before the candidate access network device sends a first message, the method further includes: The candidate access network device obtains a beam-level measurement result measured by a terminal device, where the beam-level measurement result includes indication information of at least one beam; and the candidate access network device determines indication information of the third beam set and/or indication information of the fourth beam based on the beam-level measurement result.

It should be noted that there are further a plurality of other specific implementations in this embodiment of this application. For details, refer to the specific implementations of the first aspect and beneficial effects thereof. Details are not described herein again.

According to a sixth aspect, an embodiment of this application provides a communication apparatus. The communication apparatus may be the terminal device in the foregoing implementations or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions. The processing module executes the instructions stored in the storage module, to enable the terminal device to perform the method according to any one of the second aspect or the implementations of the second aspect; or perform the method according to any one of the fourth aspect or the implementations of the fourth aspect. When the communication apparatus is the chip in the terminal device, the processing module may be a processor, and the transceiver module may be an input/output interface, a pin, a circuit, or the like. The processing module executes instructions stored in a storage module, to enable the terminal device to perform the method according to any one of the second aspect or the implementations of the second aspect; or perform the method according to any one of the fourth aspect or the implementations of the fourth aspect. The storage module may be a storage module (for example, a register or a cache) in the chip, or may be a storage module (for example, a read-only memory or a random access memory) that is in the terminal device and that is located outside the chip.

According to a seventh aspect, an embodiment of this application provides a communication apparatus. The communication apparatus may be the access network device in the foregoing implementations or may be a chip in the access network device. The access network device may be a source access network device or a candidate access network device. The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions. The processing module executes the instructions stored in the storage module, to enable the source access network device to perform the method according to any one of the first aspect or the implementations of the first aspect, or enable the candidate access network device to perform the method according to any one of the third aspect or the implementations of the third aspect, or enable the candidate access network device to perform the method according to any one of the fifth aspect or the implementations of the fifth aspect. When the communication apparatus is the chip in the access network device, the processing module may be a processor, and the transceiver module may be an input/output interface, a pin, a circuit, or the like. The processing module executes instructions stored in a storage module, to enable the source access network device to perform the method according to any one of the first aspect or the implementations of the first aspect, or enable the candidate access network device to perform the method according to any one of the third aspect or the implementations of the third aspect, or enable the candidate access network device to perform the method according to any one of the fifth aspect or the implementations of the fifth aspect. The storage module may be a storage module (for example, a register or a cache) in the chip, or may be a storage module (for example, a read-only memory or a random access memory) that is in the access network device and that is located outside the chip.

According to an eighth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any implementation of the foregoing aspects.

According to a ninth aspect, an embodiment of this application provides a computer program product including instructions. When the computer program product runs on a computer, the computer is enabled to perform the method according to any implementation of the foregoing aspects.

According to a tenth aspect, an embodiment of this application provides a computer-readable storage medium including instructions. When the instructions are run on a computer, the computer is enabled to perform the method according to any implementation of the foregoing aspects.

According to an eleventh aspect, an embodiment of this application provides a communication system. The communication system includes the source access network device that performs any one of the first aspect and the implementations of the first aspect, the terminal device that performs any one of the second aspect and the implementations of the second aspect, and the candidate access network device that performs any one of the third aspect and the implementations of the third aspect.

According to a twelfth aspect, an embodiment of this application provides a communication system. The communication system includes the terminal device according to any one of the fourth aspect and the implementations of the fourth aspect and the candidate access network device according to any one of the fifth aspect and the implementations of the fifth aspect.

### BRIEF DESCRIPTION OF DRAWINGS

FIG. 1 is an example diagram of a system architecture of a communication method according to this application;
FIG. 2 is a flowchart of a communication method according to this application;
FIG. 3 is another flowchart of a communication method according to this application;
FIG. 4 is another flowchart of a communication method according to this application;
FIG. 5 is another flowchart of a communication method according to this application;
FIG. 6 is a diagram of an embodiment of a communication apparatus according to this application;
FIG. 7 is a diagram of another embodiment of a communication apparatus according to this application; and
FIG. 8 is a diagram of another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In the specification, claims, and accompanying drawings of this application, the terms "first", "second", "third", "fourth", and so on (if existent) are intended to distinguish between similar objects but do not necessarily indicate a specific order or sequence. It should be understood that the terminology termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following first briefly describes terms in this application.

A beam (beam) may be a directional electromagnetic wave. The beam may be represented by using a spatial domain filter or a spatial filter (spatial filter), a spatial parameter (spatial parameters), a precoding matrix, a precoding matrix index, a precoding parameter, or a port. A transmit beam may also be referred to as a spatial domain transmit filter, and a receive beam may also be referred to as a spatial domain receive filter. In an actual application, the beam may alternatively have another name. In embodiments of this application, only the name "beam" is used as an example for description.

A pre-allocated uplink resource is an uplink resource or an uplink grant pre-allocated by an access network device to a terminal device. The pre-allocated uplink resource is a pre-allocated uplink grant (pre-allocated uplink grant) or a configured uplink grant (configured uplink grant, CG) resource, and is also referred to as a pre-allocated uplink scheduling resource. It should be understood that, with development of communication technologies, a pre-allocated resource may alternatively have another name, and is essentially a resource allocated by an access network device to a terminal device before the terminal device accesses the access network device. In embodiments of this application, a name "CG resource" is mainly used as an example for description.

A dynamically allocated uplink resource is an uplink resource or an uplink grant indicated by an access network device to a terminal device through a PDCCH, or may be understood as a dynamically allocated uplink grant (dynamic uplink grant, DG). The terminal device decodes the PDCCH to obtain downlink control information (downlink control information, DCI), and the DCI indicates the uplink resource. Compared with a pre-allocated uplink resource, the dynamically allocated uplink resource is essentially that the access network device indicates a time-frequency domain position of the uplink resource to the terminal device. Such an allocation manner is dynamic and flexible. In this specification, the uplink resource is briefly described as a dynamically allocated uplink resource. It should be understood that, with development of communication technologies, the dynamically allocated uplink resource may have another name. In embodiments of this application, a name "DG resource" is mainly used as an example for description.

For ease of understanding, the following first describes a system architecture and an application scenario of a communication method provided in this application.

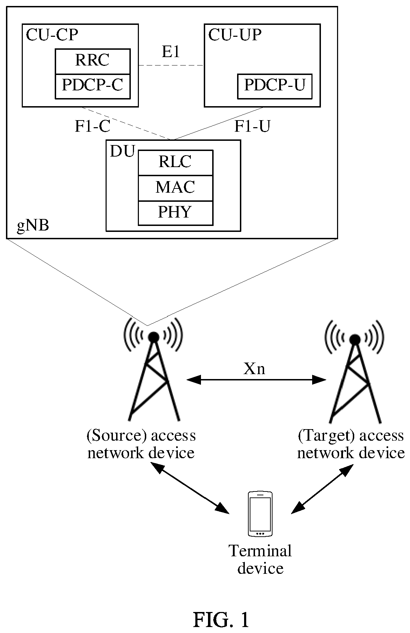

The communication method provided in this application may be applied to a long term evolution (long term evolution, LTE) system, a 5G NR (5G New Radio) system, a 6th generation mobile communication technology (6th generation mobile communication technology, 6G) system, and a subsequently evolved standard. This is not limited in this application. As shown in FIG. 1, a communication system includes at least a terminal device and an access network device.

The terminal device includes a device that provides voice and/or data connectivity for a user. For example, the terminal device may include a handheld device having a wireless connection function, or a processing device connected to a wireless modem. The terminal device may communicate with a core network (for example, a 4G core network (evolved packet core, EPC) or a 5G core network (5th generation core, 5GC)) by using a radio access network (radio access network, RAN), and may exchange a voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile), a remote station (remote station), an access point (access point, AP), a remote terminal device (remote terminal), an access terminal device (access terminal), a user terminal device (user terminal), a user agent (user agent), a user device (user device), or the like. In addition, the terminal device may be a mobile phone (mobile phone), a tablet computer (Pad), a computer with a wireless transceiver function, a virtual reality (virtual reality, VR) device, an augmented reality (augmented reality, AR) device, an extended reality (extended reality, XR) service terminal, a cloud gaming (cloud gaming, CG) service terminal, a wireless terminal in industrial control (industrial control), a wireless terminal in self-driving (self-driving), a wireless terminal in remote surgery (remote medical surgery), a wireless terminal in smart grid (smart grid), a wireless terminal in transportation safety (transportation safety), a wireless terminal in smart city (smart city), a wireless terminal in smart home (smart home), and the like. It should be understood that a specific technology for and a specific device form of the terminal device are not limited in embodiments of this application. The terminal device in this application may be any one of the foregoing devices or chips. This is not specifically limited herein. Regardless of being used as the device or the chip, the terminal device can be manufactured, sold, or used as an independent product. In this embodiment and subsequent embodiments, the terminal device is used as an example for description.

The access network device may be any device with a wireless transceiver function, and may be configured to be responsible for a function related to an air interface, for example, a radio link maintenance function, a radio resource management function, and some mobility management functions. In addition, the access network device may be further configured with a baseband unit (baseband unit, BBU), and has a baseband signal processing function. For example, the access network device may be an access network (radio access network, RAN) device that currently provides a service for the terminal device. Currently, some common examples of the access network device are a NodeB (NodeB, NB), an evolved NodeB (evolved NodeB, eNB or eNodeB), and a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), and a home base station (for example, a home evolved NodeB (home evolved NodeB) or a home NodeB (home NodeB, HNB)). In addition, in a cloud radio access network (cloud radio access network, CloudRAN), an open radio access network (open radio access network, ORAN), or another network structure, the access network device may be a device including a central unit (central unit, CU) (also referred to as a control unit) and/or a distributed unit (distributed unit, DU). The RAN device including the CU and the DU splits protocol layers of a gNB in the NR system. Functions of a part of protocol layers are centrally controlled by the CU, functions of a part or all of remaining protocol layers are distributed in the DU, and the CU centrally controls the DU. Further, as shown in FIG. 1, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, a PDCP-C). The PDCP-C is mainly responsible for encryption, decryption, integrity protection, data transmission, and the like of control plane data. The CU-UP is responsible for a user plane function, and mainly includes a service data adaptation protocol (service data adaptation protocol, SDAP) and a PDCP corresponding to a user plane (namely, a PDCP-U). The SDAP is mainly responsible for processing data of the core network and mapping a flow (flow) to a bearer. The PDCP-U is mainly responsible for encryption, decryption, integrity protection, header compression, serial number maintenance, data transmission, and the like on a data plane. The CU-CP is connected to the CU-UP through an E1 interface. The CU-CP represents that the gNB is connected to the core network through an NG interface, and the CU-CP is connected to the DU through an F1 interface control plane (namely, F1-C). The CU-UP is connected to the DU through an F1 interface user plane (namely, F 1-U). In another possible implementation, the PDCP-C is also on the CU-UP. It should be understood that the access network device in embodiments of this application may be any one of the foregoing devices or a chip in the foregoing device. This is not specifically limited herein. Regardless of being used as the device or the chip, the access network device can be manufactured, sold, or used as an independent product. In this embodiment and subsequent embodiments, the access network device is used as an example for description.

It should be noted that, in a handover procedure, an access network device that provides a service for the terminal device before a handover is referred to as a source access network device, and an access network device that provides a service for the terminal device after the handover is referred to as a target access network device. In addition, before the terminal device is handed over, an access network device that may provide a service for the terminal device after the terminal device is handed over is referred to as a candidate access network device. The target access network device may be one of at least one candidate access network device.

Optionally, the communication method provided in this application may be applied to a non-terrestrial network (non-terrestrial network, NTN) architecture, or may be applied to a terrestrial network (terrestrial network, TN) architecture. For example, the NTN architecture may be a non-terrestrial network-based NG-RAN architecture (NTN-based NG-RAN architectures) defined in a 3GPP protocol. In this case, a part or all of functions of the access network device may be implemented by a non-terrestrial network device (for example, at least one of a satellite, a tethered unmanned aerial system (tethered unmanned aerial system, TUA), a lighter than air UAS (lighter than air, LTA), a heavier than air UAS (heavier than air UAS, HTA), or a high altitude platform station (high altitude platform station, HAPS)); or the access network device provides a service for the terminal device through a non-terrestrial network device.

The communication method provided in this application is mainly applied to a scenario in which a RACH-less handover is performed, namely, a handover scenario in which during the handover, the terminal device does not perform a random access channel procedure; instead, obtains, in another manner, an uplink resource used to send uplink data to the target access network device, and sends initial uplink data (for example, a handover complete message) to a target base station. To enable the terminal device to quickly obtain the uplink resource when triggering the handover, an RRC reconfiguration message (for example, a handover command) sent by the source access network device to the terminal device usually includes an uplink resource (for example, a CG resource) pre-allocated by the candidate access network device to the terminal device, or a dynamic uplink resource (for example, a DG resource) indicated by a PDCCH sent by the candidate access network device to the terminal device, which are used as uplink resources.

If the candidate access network device indicates the DG resource to the terminal device through the PDCCH, the candidate access network device delivers the PDCCH on each beam that may be used by the terminal device, to ensure that the terminal device monitors the PDCCH on a beam on which the terminal device is located, so as to obtain the DG resource. For example, the candidate access network device may not know the beam on which the terminal device is located, and the candidate access network device sends the PDCCH on each beam in a candidate cell that may be accessed by the terminal device. However, the terminal device may usually obtain the uplink resource through a PDCCH delivered on a specific beam. Therefore, a resource sent by the candidate access network device on another beam through the PDCCH is wasted.

If the candidate access network device pre-allocates the uplink resource to the terminal device, the candidate access network device may not know the beam on which the terminal device is located, and the candidate access network device configures a CG resource for each beam in a candidate cell that may be accessed by the terminal device. However, when triggering a handover, the terminal device may use only a CG resource corresponding to a specific beam. Therefore, a CG resource configured by the candidate access network device on another beam is wasted.

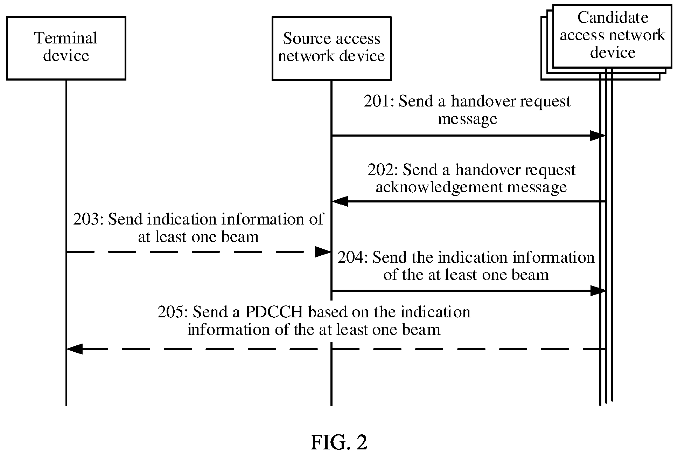

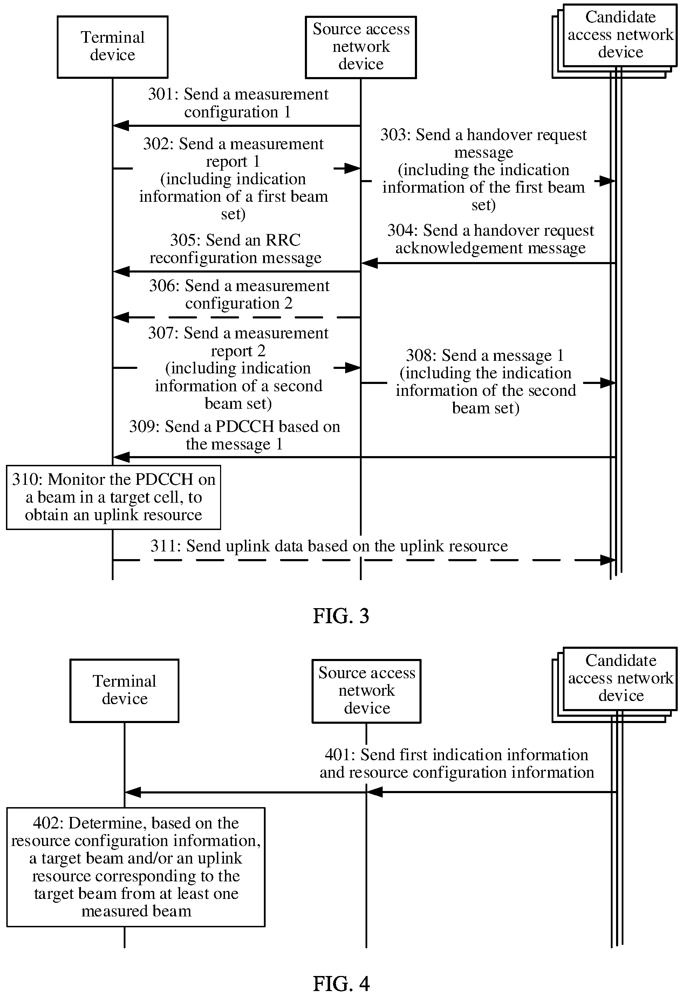

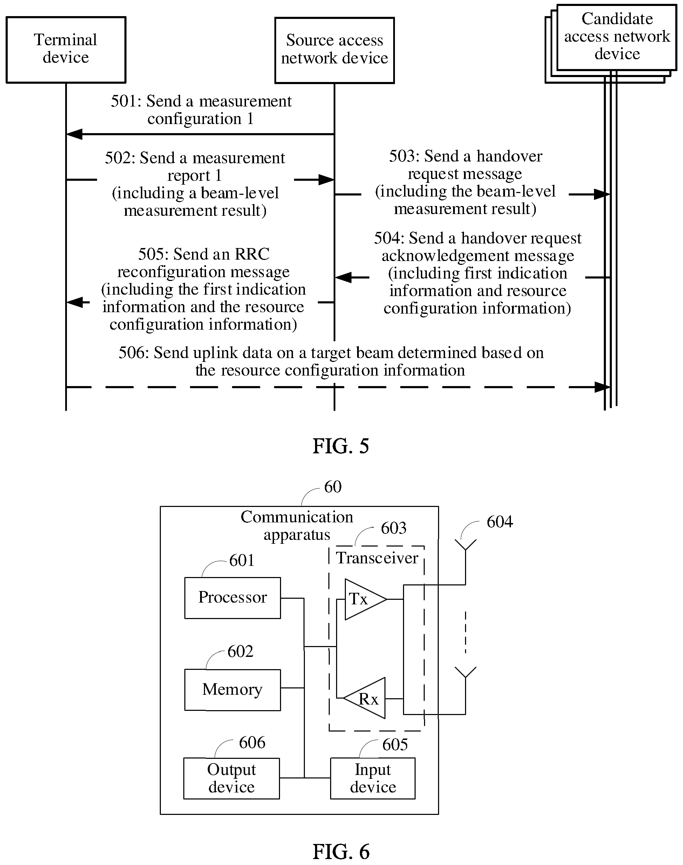

In this case, this application provides a communication method and a communication device, to improve flexibility of scheduling a resource by an access network device, and reduce a resource waste caused by a resource scheduling process, in a scenario in which a RACH-less handover is performed. For a scenario in which a target access network device allocates a dynamic uplink resource to a terminal device, refer to related descriptions in embodiments corresponding to FIG. 2 and FIG. 3. For a scenario in which a candidate access network device configures a pre-allocated uplink resource for a terminal device, refer to related descriptions in embodiments corresponding to FIG. 4 and FIG. 5.

FIG. 2 is a flowchart of an embodiment of a communication method according to this application. In this embodiment, a candidate access network device indicates a DG resource to a terminal device through a PDCCH. The terminal device, a source access network device, and the candidate access network device perform the following steps.

Step 201: The source access network device sends a handover request (handover request) message to at least one candidate access network device. Correspondingly, the at least one candidate access network device receives the handover request message from the source access network device.

Step 202: The at least one candidate access network device sends a handover request acknowledgement (handover request acknowledge) message to the source access network device. Correspondingly, the source access network device receives the handover request acknowledgement message from the at least one candidate access network device.

In this embodiment, after making a handover decision (handover decision), the source access network device may send the handover request message to a candidate access network device corresponding to a candidate cell determined by the terminal device. The candidate access network device performs access control. If the candidate access network device agrees to provide a service for the terminal device in a subsequent process, the candidate access network device feeds back the handover request acknowledgement message to the source access network device. The handover request acknowledgement message includes a transparent container, and the transparent container includes parameters such as a new cell radio network temporary identifier (cell radio network temporary identifier, C-RNTI) and a security-related algorithm of the candidate access network device.

In a conventional handover, there is only one candidate access network device. In this case, the candidate access network device is a target access network device. In a conditional handover, there may be one or more candidate access network devices. The terminal device determines a candidate access network device to which the terminal device is to be handed over, and the candidate access network device to which the terminal device is to be handed over is a target access network device.

Step 203: The terminal device sends indication information of at least one beam to the source access network device. Correspondingly, the source access network device receives the indication information of the at least one beam from the terminal device.

The terminal device is a terminal device that performs a RACH-less handover. For example, the source access network device indicates, through an RRC reconfiguration message (for example, a handover command), the terminal device to perform the RACH-less handover.

The indication information of the at least one beam indicates at least one beam measured by the terminal device. Optionally, a beam indicated by the indication information of the at least one beam is a new beam that is measured by the terminal device and that can reflect a position at which the terminal device is located. In this way, after the terminal device reports the indication information of the at least one beam to a network side, the candidate access network device on the network side can more accurately determine one or more beams used to send the PDCCH, without a need to send the PDCCH on all beams in the candidate cell of the candidate access network device. Therefore, the indication information of the at least one beam is used by the at least one candidate access network device to determine a beam for sending the PDCCH to the terminal device.

Optionally, the indication information that is of the at least one beam and that is sent by the terminal device may be indication information of a beam in a candidate cell of the candidate access network device, or may be indication information of a beam in a plurality of candidate cells of the candidate access network device. For example, the terminal device measures at least one beam in a candidate cell of the candidate access network device, and then sends indication information of at least one measured beam to the source access network device.

Optionally, the indication information of the at least one beam includes an index (index) of each of the at least one beam. For example, when the indication information of the at least one beam includes only the index of the beam, the access network device can determine, in another manner, a specific cell to which the beam belongs. For example, the access network device determines a cell identifier based on a measurement identifier corresponding to an index of the reported beam, to determine a specific cell to which the beam reported by the terminal device belongs. It should be noted that, in some scenarios, the index of the beam is also referred to as a beam number of the beam, a beam index, a beam identifier (identifier, ID), or the like. In this application, only a name "index of the beam" is used for description.

Optionally, the indication information of the at least one beam further includes a cell identifier corresponding to each of the at least one beam. The cell identifier corresponding to the beam indicates a specific cell whose beam is measured by the terminal device, or a specific cell that is of a specific candidate access network device and to which the beam belongs.

Optionally, the indication information of the at least one beam further includes at least one of a resource number of an uplink signal, a resource number of a downlink signal, an absolute index of a beam, a relative index of a beam, a logical index of a beam, an index of an antenna port corresponding to a beam, an index of an antenna port group corresponding to a beam, an index of a downlink signal corresponding to a beam, a time index of a downlink synchronization signal block corresponding to a beam, beam pair link (beam pair link, BPL) information, a transmit parameter (Tx parameter) corresponding to a beam, a receive parameter (Rx parameter) corresponding to a beam, a transmit weight corresponding to a beam, a weight matrix corresponding to a beam, a weight vector corresponding to a beam, a receive weight corresponding to a beam, an index of a transmit weight corresponding to a beam, an index of a weight matrix corresponding to a beam, an index of a weight vector corresponding to a beam, an index of a receive weight corresponding to a beam, a receive codebook corresponding to a beam, a transmit codebook corresponding to a beam, an index of a receive codebook corresponding to a beam, or an index of a transmit codebook corresponding to a beam.

In an example, the indication information of the at least one beam includes a correspondence between an identifier of a cell and the at least one beam, or may be understood as including an identifier of a cell and an index of a beam in the cell.

For example, the beam indicated by the indication information of the at least one beam is a beam in a cell. The terminal device measures a total of two beams, namely, a beam 1 and a beam 2 in a cell 1. The indication information that is of the at least one beam and that is reported by the terminal device includes an identifier of the cell 1, an index of the beam 1, and an index of the beam 2, namely, {identifier of a cell 1: index of a beam 1, index of a beam 2} that indicates that the beam 1 and the beam 2 belong to the cell 1.

For example, the beam indicated by the indication information of the at least one beam includes beams in a plurality of cells. If the terminal device measures a beam 1 and a beam 2 in a cell 1, and measures a beam 3 and a beam 4 in a cell 2, the indication information that is of the at least one beam and that is reported by the terminal device includes an identifier of the cell 1, an index of the beam 1 in the cell 1, and an index of the beam 2 in the cell 1; and an identifier of the cell 2, an index of the beam 3 in the cell 2, and an index of the beam 4 in the cell 2. For example, the indication information of the at least one beam in this example may be represented in the following form:
{identifier of a cell 1: index of a beam 1, index of a beam 2;
identifier of a cell 2: index of a beam 3, index of a beam 4}.

In another example, the indication information of the at least one beam includes a correspondence between each of the at least one beam and a cell identifier.

For example, the beam indicated by the indication information of the at least one beam is a beam in a cell. The terminal device measures a total of two beams, namely, a beam 1 and a beam 2 in a cell 1, and the indication information that is of the at least one beam and that is reported by the terminal device includes an index of the beam 1, a cell identifier corresponding to the index of the beam 1, an index of the beam 2, and a cell identifier corresponding to the index of the beam 2. For example, the indication information of the at least one beam may be represented as {index of a beam 1-identifier of a cell 1; index of a beam 2-identifier of the cell 1}.

For example, the beam indicated by the indication information of the at least one beam includes beams in a plurality of cells. If the terminal device measures a beam 1 and a beam 2 in a cell 1, and measures a beam 3 in a cell 2, the indication information that is of the at least one beam and that is reported by the terminal device includes an index of the beam 1, a cell identifier corresponding to the index of the beam 1, an index of the beam 2, a cell identifier corresponding to the index of the beam 2, an index of the beam 3, and a cell identifier corresponding to the index of the beam 3. For example, the indication information of the at least one beam in this example may be represented in the following form:
{index of a beam 1-identifier of a cell 1;
index of a beam 2-identifier of the cell 1;
index of a beam 3-identifier of a cell 2}.

Optionally, the cell identifier may be a physical cell identifier (physical cell identifier, PCI), a global cell identifier (cell global identifier, CGI), or a logical cell identifier. This is not limited herein.

Optionally, the indication information of the at least one beam further includes signal quality information of each of the at least one beam. The signal quality information of the beam indicates signal quality of the beam. For example, the signal quality information of the beam may be reference signal received power (reference signal received power, RSRP), reference signal received quality (reference signal received quality, RSRQ), or a signal to interference plus noise ratio (signal to interference plus noise ratio, SINR). This is not limited herein.

For example, the at least one beam may be a beam that has good signal quality in the candidate cell and that is measured by the terminal device; or the at least one beam may be a beam that is suitable for receiving the PDCCH from the candidate cell and that is measured by the terminal device; or the at least one beam may be a beam on which the PDCCH from the candidate cell is easily monitored and that is measured by the terminal device; or the at least one beam may be a beam that meets a camping condition of the terminal device.

In a possible implementation, each of at least one beam that is in the candidate cell and that is reported by the terminal device meets any one of the following preset conditions:
In an example preset condition, the beam reported by the terminal device is a beam with optimal signal quality among beams measured by the terminal device. For example, the terminal device compares signal quality of a plurality of measured beams in a specific neighboring cell, and reports, to the source access network device in a form of beam indication information, a measured beam that has optimal signal quality in the neighboring cell. The beam with optimal signal quality may be a beam with a largest RSRQ value, or may be a beam with a largest RSRP value, or may be a beam with a largest SINR value, or may be a beam with optimal comprehensively evaluated signal quality. This is not limited herein. It may be understood that after the terminal device reports an optimal beam in the candidate cell to the source access network device, and the optimal beam that is in the candidate cell and that is measured by the terminal device changes, the terminal device reports a latest optimal beam to the source access network device in a form of beam indication information.

For example, the terminal device compares signal quality of a plurality of measured beams in a specific neighboring cell, and reports, to the source access network device in a form of beam indication information, first measured several beams that have signal quality in descending order in the neighboring cell. The signal quality may be an RSRQ value, or may be an RSRP value, or may be an SINR value, or may be comprehensively evaluated signal quality. This is not limited herein. A specific quantity of beams to be reported may be determined by the terminal device, or a quantity of beams to be reported may be indicated by the access network device to the terminal device.

In another example preset condition, signal quality of the beam reported by the terminal device is greater than or equal to a reference threshold. The reference threshold may be determined by the terminal device, or may be configured by the source access network device. The reference threshold may be one or more of an RSRP value, an RSRQ value, and an SINR value. For example, the terminal device reports, to the source access network device in a form of beam indication information, a measured beam with signal quality greater than or equal to the reference threshold.

In another example preset condition, signal quality of the beam reported by the terminal device is greater than or equal to signal quality of a reference beam. The beam reported by the terminal device is different from the reference beam. For example, the reference beam may be a beam reported by the terminal device to the source access network device at a specific historical moment (for example, a beam that is sent by the terminal device to the source access network device and that is used by the source access network device to make a handover decision), or may be a beam determined by the source access network device. This is not limited herein. That the beam reported by the terminal device is different from the reference beam may mean that indexes of the beams are different. For example, indexes of beams reported by the terminal device are an index 1 and an index 2, and an index of the reference beam is an index 3. For example, the terminal device reports, to the source access network device in a form of beam indication information, a measured beam with signal quality greater than or equal to signal quality of the reference beam.

In another example preset condition, signal quality of the beam reported by the terminal device is greater than or equal to a reference threshold, and the beam reported by the terminal device is different from a reference beam. For example, the reference beam may be a beam reported by the terminal device to the source access network device at a specific historical moment (for example, a beam that is sent by the terminal device to the source access network device and that is used by the source access network device to make a handover decision), or may be a beam determined by the source access network device. This is not limited herein. For example, the terminal device reports, to the source access network device in a form of beam indication information, a measured beam with signal quality greater than or equal to the reference threshold that does not belong to the reference beam.

It may be understood that the reference beam may be a reference beam that is in a specific neighboring cell and that is delivered by the access network device, and a terminal measures the beam in the neighboring cell and compares the beam and the reference beam.

It should be noted that the terminal device may report the indication information of the beam periodically, or based on an event, for example, based on the preset condition.

It should be noted that the indication information that is of the at least one beam and that is sent by the terminal device to the source access network device may be determined based on a physical layer measurement result (namely, a layer 1 measurement result), or may be determined based on a measurement result (namely, a measurement result obtained through layer 1 filtering) obtained by filtering the physical layer measurement result, or may be determined based on a measurement result (namely, a measurement result obtained through layer 3 filtering) obtained after a physical layer performs measurement and makes a report to an RRC layer for filtering. This is not limited herein.

It should be noted that when the terminal device performs measurement and determines signal quality, and a measured beam is continuously greater than a specific threshold in duration, it is considered that the beam meets a condition of the threshold.

It should be further noted that, in this step, the indication information that is of the at least one beam and that is sent by the terminal device to the source access network device may be reported by the terminal device based on a measurement configuration in a conventional technology, or may be reported based on a measurement configuration newly delivered by the source access network device. The following separately provides descriptions.

In a possible implementation, before the source access network device sends the handover request message to the candidate access network device, the source access network device sends measurement configuration information (for example, a measurement configuration 1 in an embodiment corresponding to FIG. 3) to the terminal device. The measurement configuration information indicates the terminal device to report a beam measurement result. The source access network device makes a handover decision based on a beam measurement result currently reported by the terminal device. In this application, after the terminal device reports the beam measurement result to be used by the source access network device to make the handover decision, the terminal device can further measure the beam in the neighboring cell, and report a measured beam measurement result to the source access network device again. The measurement result includes beam indication information. For example, the terminal device can continuously or periodically report the beam measurement result. For example, before triggering a handover, the terminal device can continuously or periodically report the beam measurement result.

Optionally, a beam that is most recently reported by the terminal device is a beam different from the reported beam. Optionally, a beam that is most recently reported by the terminal device is a beam that meets the preset condition. The terminal device may report indication information of one beam through one message, or may report indication information of a plurality of beams through one message. The terminal device may report indication information of one or more beams in one cell, or the terminal device may report indication information of one or more beams corresponding to a plurality of cells.

In another possible implementation, the source access network device sends newly defined measurement configuration information (for example, a measurement configuration 2 in the embodiment corresponding to FIG. 3) to the terminal device. The measurement configuration information indicates the terminal device to report indication information of a beam that meets the preset condition. The terminal device measures the beam in the neighboring cell based on the received newly defined measurement configuration information, and reports, to the source access network device in a form of beam indication information, at least one measured beam that meets the preset condition.

Optionally, the measurement configuration information includes indication information of the reference beam and/or the reference threshold. The indication information of the reference beam includes the index of the reference beam. Optionally, the indication information of the reference beam further includes a cell identifier of a cell in which the reference beam is located. Optionally, the indication information of the reference beam further includes signal quality information of the reference beam. Optionally, the indication information of the reference beam further includes a quality type (for example, an RSRP, RSRQ, and an SINR) of the reference beam. The reference beam may be determined by the source access network device based on a measurement report historically reported by the terminal device, or may be independently selected by the source access network device. This is not limited herein. The reference threshold is a threshold of the signal quality of the beam.

Optionally, the measurement configuration information further includes an upper limit of a quantity of reported beams, that is, a maximum value of a quantity of beams in a specific neighboring cell that meet a condition and that are reported by the terminal device. For example, the upper limit of the quantity of reported beams is a, and a quantity of beams in a specific neighboring cell that meet the preset condition and that are measured by the terminal device is b. Herein, both a and b are positive integers. If b is less than a, the terminal device may report indication information of b beams through one message; or if b is greater than a, the terminal device reports indication information of a maximum of a beams through one message.

Optionally, the measurement configuration information may further include parameters such as a measurement interval, a quantity of reports, evaluation duration, periodicity duration, and a reference signal class. This is not limited in this application.

It should be noted that the reference threshold may be an RSRP-based threshold, an RSRQ-based threshold, an SINR-based threshold, or the like.

Optionally, the measurement configuration information further includes a cell identifier of at least one candidate cell, to indicate that the terminal device needs to measure a cell indicated by the cell identifier. When the measurement configuration information does not include the cell identifier, the terminal device measures the at least one neighboring cell by default, and the at least one neighboring cell may include one or more candidate cells.

Optionally, the measurement configuration information is RRC layer measurement configuration information (namely, layer 3 measurement configuration information); or the measurement configuration information is physical layer measurement configuration information (namely, layer 1 measurement configuration information). An RRC layer measurement configuration is to report a measurement result at the RRC layer. A physical layer measurement configuration is to report a measurement result at the physical layer (for example, a physical uplink control channel (physical uplink control channel, PUCCH) or on a physical uplink data shared channel (physical uplink shared channel, PUSCH)). The physical layer measurement configuration may be delivered by using RRC layer signaling, or may be delivered by using a physical layer measurement configuration. For example, if the source access network device delivers the physical layer measurement configuration information (namely, the layer 1 measurement configuration information), the terminal device performs physical layer measurement, and the indication information that is of the at least one beam and that is sent by the terminal device to the source access network device may be a physical layer measurement result (namely, a layer 1 measurement result) or a measurement result (namely, a measurement result obtained through layer 1 filtering) obtained by filtering the physical layer measurement result; or if the source access network device delivers the RRC layer measurement configuration information (namely, the layer 3 measurement configuration information), the terminal device performs RRC layer measurement, and the indication information that is of the at least one beam and that is sent by the terminal device to the source access network device is a measurement result (namely, a measurement result obtained through layer 3 filtering) obtained after a physical layer performs measurement and makes a report to an RRC layer for filtering.

Step 203 is an optional step.

Step 204: The source access network device sends the indication information of the at least one beam to the at least one candidate access network device. Correspondingly, the at least one candidate access network device receives the indication information of the at least one beam from the source access network device.

It should be noted that the beam indicated by the indication information that is of the at least one beam and that is reported by the terminal device to the source access network device in step 203 may be different from a beam indicated by the indication information that is of the at least one beam and that is sent by the source access network device to the at least one candidate access network device in step 204.

The indication information that is of the at least one beam and that is received by the source access network device from the terminal device may include a plurality of beams in a same cell, or may include a plurality of beams in different cells of a same access network device, or may include beams in a plurality of cells, where the plurality of cells belong to different access network devices. The source access network device may send the indication information of the at least one beam to the candidate access network device in any one of the following implementations.

In a possible implementation, the source access network device sends indication information of a beam in a cell of the candidate access network device to the candidate access network device, and the candidate access network device receives the indication information of the beam in the cell of the candidate access network device. For example, a cell a belongs to a candidate access network device A, and the source access network device sends indication information of a beam in the cell a to the access network device A.

For example, the indication information of the at least one beam indicates a total of three beams: a beam 1, a beam 2, and a beam 3. The beam 1 and the beam 2 belong to a cell 1 of a candidate access network device 1, and the beam 3 belongs to a cell 2 of a candidate access network device 2. The source access network device sends indication information of the beam 1 and the beam 2 in the cell 1 to the candidate access network device 1, and sends indication information of the beam 3 in the cell 2 to the candidate access network device 2.

In another possible implementation, the source access network device may transparently transmit the indication information of the at least one beam to the at least one candidate access network device. In other words, each candidate access network device receives the indication information of the at least one beam. In other words, indication information that is of at least one beam and that is received by all candidate access network devices has same content. The candidate access network device determines, based on the index of the beam in the indication information of the at least one beam and/or the cell identifier corresponding to the beam, that the beam indicated by the indication information of the at least one beam belongs to a beam of the candidate access network device. Optionally, the indication information of the beam includes the cell identifier corresponding to the beam and the index of the beam.

For example, the indication information of the at least one beam indicates a total of three beams: a beam 1, a beam 2, and a beam 3. The beam 1 and the beam 2 belong to a cell 1 of a candidate access network device 1, and the beam 3 belongs to a cell 2 of a candidate access network device 2. Indication information that is of at least one beam and that is sent by the source access network device to the candidate access network device 1 includes indication information (for example, an identifier of the cell 1, an index of the beam 1, and an index of the beam 2) of a beam in the cell 1 and indication information (for example, an identifier of the cell 2 and an index of the beam 3) of a beam in the cell 2, and indication information that is of at least one beam and that is sent by the source access network device to the candidate access network device 2 includes the indication information (for example, the identifier of the cell 1, the index of the beam 1, and the index of the beam 2) of the beam in the cell 1 and the indication information (for example, the identifier of the cell 2 and the index of the beam 3) of the beam in the cell 2.

It should be noted that the source access network device may define a new message to send the indication information of the at least one beam to the at least one candidate access network device, or may reuse a message in a conventional technology to send the indication information of the at least one beam to the at least one candidate access network device. This is not limited in this application.

It should be noted that, when there is an interface between the source access network device and the candidate access network device, a message including beam indication information may be directly transmitted; or when there is no interface between the source access network device and the candidate access network device, a message including beam indication information may be transmitted through a core network. To be specific, the source access network device sends the message to the core network, and then, the core network transmits the message to the candidate access network device. When the source access network device and the candidate access network device are connected to different core networks, the message may be transparently transmitted between the core networks.

Optionally, the message that is used by the source access network device to send the indication information of the at least one beam may further include one or more of the following:
information such as an identifier allocated by the source access network device to the terminal device and an identifier allocated by the candidate access network device to the terminal device.

It should be further noted that the source access network device may send the beam indication information a plurality of times. For example, when indication information that is of a beam in a specific neighboring cell and that is reported by the terminal device changes, the source access network device may report indication information of an updated beam in the neighboring cell to the candidate access network device. For another example, the source access network device may send beam indication information for a same candidate cell a plurality of times, to update beam information to the candidate cell.

Step 205: The candidate access network device sends the PDCCH to the terminal device based on the indication information of the at least one beam. Correspondingly, the terminal device receives the PDCCH from the candidate access network device.

For example, the candidate access network device sends the PDCCH to the terminal device based on the indication information of the at least one beam, to indicate an uplink resource. Correspondingly, the terminal device monitors the PDCCH from the candidate access network device, to obtain the uplink resource.

Step 205 is an optional step.

Optionally, the candidate access network device sends the PDCCH through a beam that is in a cell that belongs to the candidate access network device and that is in the indication information of the at least one beam. Downlink control information (downlink control information, DCI) carried in the PDCCH indicates an uplink resource allocated to the terminal device. For example, the uplink resource is a physical uplink data shared channel (physical uplink shared channel, PUSCH), and the PDCCH indicates a time-frequency domain position of the PUSCH.

For example, the indication information of the at least one beam indicates a total of three beams: a beam 1, a beam 2, and a beam 3. The beam 1 and the beam 2 belong to a cell 1 of a candidate access network device 1, and the beam 3 belongs to a cell 2 of a candidate access network device 2. The candidate access network device 1 sends the PDCCH on the beam 1 and the beam 2 in the cell 1. DCI in the PDCCH indicates a time-frequency domain position of the uplink resource.

It should be noted that when the terminal device determines the target cell to perform a RACH-less handover, the terminal device selects at least one beam in the target cell, and monitors the PDCCH on the beam. The target cell is a cell of a specific candidate access network device in the at least one candidate access network device, and the candidate access network device in which the target cell is located is also referred to as a target access network device. The beam that is in the target cell and that is selected by the terminal device is a beam that meets a condition and that is measured by the terminal device, for example, a beam that has optimal signal quality in the target cell and that is measured by the terminal device.

It should be noted that the handover in this application may be a handover performed through an Xn interface, or may be a handover performed through an NG interface. A handover type is not limited in this application. The handover in this application may be any one of a conventional handover, a conditional handover (conditional handover, CHO), a layer 1 or layer 2-triggered mobility (L1/L2-Triggered Mobility, LTM) handover, or a subsequently introduced handover. This is not limited herein.

In this application, after receiving the handover request acknowledgement message, the source access network device can send the indication information of the at least one beam to the at least one candidate access network device. However, in the conventional technology, the source access network device may use a handover request to carry only the measurement result reported by the terminal device. The measurement result may include a cell-based measurement result, or may include a beam-based measurement result. However, in this application, the source access network device has a capability of sending the indication information of the at least one beam to the candidate access network device after sending the handover request message to the candidate access network device. This helps the candidate cell of the candidate access network device determine, based on the indication information of the at least one beam, the beam for sending the PDCCH, instead of sending the PDCCH on each beam in the candidate cell of the candidate access network device. Therefore, when the beam that is in the candidate cell and that is measured by the terminal device changes, the beam for delivering the PDCCH can still be accurately determined, thereby improving delivery accuracy of a base station. In this way, the terminal device obtains the uplink resource by decoding the PDCCH in advance, thereby reducing a handover delay and improving handover efficiency.

In addition, in a possible implementation, the handover request message in step 201 includes indication information of at least one first beam measured by the terminal device. For example, before the source access network device makes a handover decision, the source access network device can receive, from the terminal device, a measurement result that is of a beam and that is reported by the terminal device, namely, the indication information of the at least one first beam. The source access network device sends, to the at least one candidate access network device through the handover request message, the measurement result that is of the beam and that is reported by the terminal device.

Optionally, the beam indicated by the indication information of the at least one beam is different from a beam indicated by the indication information of the at least one first beam. For ease of description, the indication information that is of the at least one first beam and that is sent by the source access network device to the at least one candidate access network device through the handover request message in step 201 is referred to as indication information of a first beam set. The first beam set includes the at least one first beam. The indication information that is of the at least one beam and that is sent by the source access network device to the at least one candidate access network device in step 204 is referred to as indication information of a second beam set. The second beam set includes the at least one beam.

Optionally, when a beam in a same cell changes, the source access network device sends the indication information of the second beam set. In other words, a beam that belongs to a specific cell in the second beam set changes relative to a beam in the cell in the first beam set.

In an example, the beam indicated by the indication information of the at least one beam is completely different from the beam indicated by the indication information of the at least one first beam. In other words, a beam indicated by the indication information of the first beam set is completely different from a beam indicated by the indication information of the second beam set. For example, the indication information of the first beam set indicates the beam 1 and the beam 2 in the cell 1, and the indication information of the second beam set indicates the beam 3 and the beam 4 in the cell 1.

In another example, the beam indicated by the indication information of the at least one beam is partially the same as the beam indicated by the indication information of the at least one first beam. In other words, a beam indicated by the indication information of the first beam set is not completely different from a beam indicated by the indication information of the second beam set. For example, the indication information of the first beam set indicates the beam 1 and the beam 2 in the cell 1, and the indication information of the second beam set indicates the beam 2 and the beam 3 in the cell 1.

It may be understood that, compared with the indication information of the first beam set, the indication information of the second beam set is indication information of an updated beam or indication information of a new beam obtained after beam information that is of a neighboring cell and that is measured by a terminal changes. This helps the candidate access network device determine, based on indication information of at least one updated beam, a beam that is more suitable for sending the PDCCH to the terminal device, instead of determining, for the terminal device based on indication information of at least one first beam that may have expired or become invalid, a beam for sending the PDCCH. Therefore, this helps improve flexibility and accuracy of scheduling a resource by the candidate access network device, and improve efficiency of scheduling the uplink resource for the terminal device.

In addition, it should be further noted that the "handover" in this application may be conditional handover (conditional handover, CHO), is a handover manner proposed in a new radio (new radio, NR) system, and is a cell handover triggered based on a condition, to improve robustness (Robustness) of the terminal device during a cell handover. In this case, the handover request message is a conditional handover request (conditional handover request, CHO request) message, and the handover request acknowledgement message is a conditional handover request acknowledgement (conditional handover request acknowledge, CHO request ACK) message. The source access network device configures the conditional handover for the terminal device by using the RRC reconfiguration message to carry a condition configuration of the conditional handover CHO. The at least one candidate access network device is a candidate access network device for which the conditional handover is configured. The target access network device of the handover triggered by the terminal device is a specific candidate access network device that satisfies a conditional handover event and that is measured by the terminal device.

There is a period of time from obtaining the condition configuration of the conditional handover CHO by the terminal device from the RRC reconfiguration message to measuring by the terminal device a target cell of the target access network device that satisfies the handover event. An optimal beam that is in the neighboring cell and that is measured by the terminal device in the period of time may no longer be a beam reported by the terminal device to the source access network device before the source access network device makes the handover decision; or before the source access network device makes the handover decision, the candidate access network device does not receive the measurement result that is of the beam and that is reported by the terminal device. Therefore, the source access network device reports the indication information of the at least one beam to the at least one candidate access network device. This helps report a latest beam measurement result measured by the terminal device to the at least one candidate access network device, and helps the candidate access network device determine, based on the indication information of the at least one beam, a beam, that is more suitable for the terminal device, for sending the PDCCH, instead of sending the PDCCH on each beam in the candidate cell of the candidate access network device. Therefore, when the beam that is in the candidate cell and that is measured by the terminal device changes, the beam for delivering the PDCCH can still be accurately determined, thereby improving delivery accuracy of a base station. In this way, the terminal device obtains an uplink resource by decoding the PDCCH in advance, thereby reducing a handover delay and improving handover efficiency.

In addition, when RACH-less is introduced into an NTN system, a cell measured by the terminal device may change due to movement of an NTN access network device (for example, a satellite), and an optimal beam measured by the terminal device may also change. However, in this application, a source satellite reports the indication information of the at least one beam to the at least one candidate satellite. This helps report a latest beam measurement result measured by the terminal device to at least one candidate satellite, and helps the candidate satellite determine, based on the indication information of the at least one beam, a beam, that is more suitable for the terminal device, for sending the PDCCH, instead of sending the PDCCH on each beam in a candidate cell of the candidate satellite. Therefore, when the beam that is in the candidate cell and that is measured by the terminal device changes, the beam for delivering the PDCCH can still be accurately determined, thereby improving delivery accuracy of a base station. In this way, the terminal device obtains an uplink resource by decoding the PDCCH in advance, thereby reducing a handover delay and improving handover efficiency.

With reference to FIG. 3, the following further describes the communication method provided in this application. FIG. 3 is a flowchart of an embodiment of a communication method according to this application in a scenario in which a RACH-less procedure is used during a conditional handover. In this embodiment, a terminal device, a source access network device, and a candidate access network device perform the following steps.

Step 301: The source access network device sends a measurement configuration 1 to the terminal device. Correspondingly, the terminal device receives the measurement configuration 1 from the source access network device.

The measurement configuration 1 indicates the terminal device to measure and report cell signal quality of a neighboring cell that meets a condition, and/or indicates the terminal device to measure and report signal quality of a beam that meets a condition in a neighboring cell.

For example, the measurement configuration 1 is a measurement configuration such as A3, A4, or A5.

Step 302: The terminal device sends a measurement report 1 to the source access network device. Correspondingly, the source access network device receives the measurement report 1 from the terminal device.

The measurement report 1 includes a measurement result of one or more beams, and the measurement result includes indication information of at least one first beam, which is referred to as indication information of a first beam set below.

Optionally, the source access network device determines indication information of a reference beam based on the indication information of the first beam set. The indication information of the reference beam indicates one reference beam or a plurality of reference beams. For example, the source access network device determines a beam with good signal quality in the first beam set as a reference beam. For example, if the first beam set includes four beams, the four beams are sorted as a beam 1, a beam 3, a beam 2, and a beam 4 in ascending order of signal quality of the four beams, and the source access network device needs to determine two reference beams, the source access network device may determine the beam 1 and the beam 3 as reference beams.

Optionally, the indication information of the first beam set includes an index (index) of each beam in the first beam set.

Optionally, the indication information of the first beam set further includes a cell identifier corresponding to each beam in the first beam set.

Optionally, the indication information of the first beam set further includes signal quality information of each beam in the first beam set.

It should be noted that step 301 and step 302 are optional steps. For example, before making a handover decision, the source access network device may not require the terminal device to measure signal quality of a beam or a cell. For example, in a handover in a conventional technology, the source access network device needs to make a decision based on a measurement report. However, in a conditional handover scenario or an NTN communication scenario, the source access network device may predict a cell in a to-be-covered area, and therefore, may make the handover decision without depending on the measurement report.

After the source access network device and the terminal device perform step 301 and step 302, the source access network device may make the handover decision based on the measurement report 1. For example, the source access network device determines, based on the measurement report 1 and radio resource management (radio resource management, RRM) information, whether to perform a conditional handover CHO. For another example, the source access network device determines at least one candidate access network device based on the measurement report 1, namely, an access network device that may provide a service for the terminal device after the handover.

Step 303: The source access network device sends a handover request message to the at least one candidate access network device. Correspondingly, the at least one candidate access network device receives the handover request message from the source access network device.

Optionally, the handover request message is a conditional handover request (Handover Request) message. If the source access network device determines to perform the conditional handover, the source access network device sends the conditional handover request message to the at least one candidate access network device. To be specific, the source access network device sends one conditional handover request message to each candidate cell of each candidate access network device. The conditional handover request message is used by the candidate cell of the candidate access network to prepare a resource for the terminal device.

Optionally, the handover request message includes the measurement report 1, and the measurement report 1 includes the indication information of the first beam set.

Step 304: The candidate access network device sends a handover request acknowledgement message to the source access network device. Correspondingly, the source access network device receives the handover request acknowledgement message from the candidate access network device.

Optionally, the handover request acknowledgement message is a conditional handover request acknowledgement (Handover Request ACK) message. After the source access network device sends the conditional handover request (Handover Request) message to the at least one candidate access network device, if the candidate cell of the candidate access network device successfully admits the terminal device, the candidate access network device sends the conditional handover request acknowledgement message to the source access network device.

Optionally, the conditional handover request acknowledgement message includes a configuration of a candidate cell of the CHO.

Step 305: The source access network device sends an RRC reconfiguration (RRC Reconfiguration) message to the terminal device. Correspondingly, the terminal device receives the RRC reconfiguration message from the source access network device.

The RRC reconfiguration message includes first indication information and a CHO configuration of a cell of the at least one candidate access network device, and the first indication information indicates the terminal device to perform a random access channel less RACH-less handover. Optionally, the CHO configuration includes an identifier of an applicable cell (applicable cell) of the CHO, a measurement identifier corresponding to the CHO, a measurement object (measurement object, MO) that corresponds to the CHO and that is determined by the terminal device based on the measurement identifier, an event that needs to be satisfied by the applicable cell of the CHO, and the like.

Optionally, the RRC reconfiguration message does not include an uplink resource pre-allocated by the candidate access network device.

It should be noted that, in a conventional handover, the RRC reconfiguration message is used to trigger the terminal device to perform the handover. In the conditional handover, the RRC reconfiguration message includes information such as the CHO configuration and a CHO trigger condition. Therefore, in some scenarios, the RRC reconfiguration message is also referred to as a handover command. For example, a reconfiguration message including a reconfiguration With Sync information element is referred to as a handover command.

Step 306: The source access network device sends a measurement configuration 2 to the terminal device. Correspondingly, the terminal device receives the measurement configuration 2 from the source access network device.

The measurement configuration 2 is measurement configuration information newly defined by the source access network device, or may be understood as a preset condition delivered by the source access network device to the terminal device. The measurement configuration 2 indicates the terminal device to report indication information of a beam that meets the preset condition. For example, the beam that meets the preset condition may be a beam with optimal signal quality in a beam measured by the terminal device, or may be a beam whose signal quality is greater than or equal to a reference threshold, or may be a beam whose signal quality is greater than or equal to signal quality of the reference beam.

Optionally, the measurement configuration 2 includes the indication information of the reference beam and/or the reference threshold. The indication information of the reference beam includes an index of the reference beam. Optionally, the indication information of the reference beam further includes a cell identifier of a cell in which the reference beam is located. Optionally, the indication information of the reference beam further includes signal quality information of the reference beam. The reference beam may be determined by the source access network device based on a beam historically reported by the terminal device (for example, the reference beam is determined by the source access network device based on the first beam set in step 302), or may be independently selected by the source access network device. This is not limited herein. The reference threshold is a threshold of signal quality of a beam.

Optionally, the measurement configuration information further includes a cell identifier of at least one candidate cell.

Optionally, the measurement configuration 2 further includes parameters such as an upper limit of a quantity of reported beams, a measurement interval, a quantity of reports, and evaluation duration. This is not limited in this application. Optionally, the measurement configuration 2 is RRC layer measurement configuration information (namely, layer 3 measurement configuration information); or the measurement configuration information is physical layer measurement configuration information (namely, layer 1 measurement configuration information).

For details, refer to the descriptions of the measurement configuration information newly defined by the source access network device in step 203. Details are not described herein again.

It should be noted that step 306 is an optional step. If the source access network device performs step 306, that is, the source access network device delivers the measurement configuration 2 to the terminal device, a measurement report 2 reported by the terminal device to the source access network device in step 307 is measured by the terminal device based on the measurement configuration 2; or if the source access network device does not perform step 306, that is, the source access network device does not deliver the measurement configuration 2 to the terminal device, a measurement report 2 reported by the terminal device to the source access network device in step 307 is measured by the terminal device based on the measurement configuration 1. The following only provides descriptions by using an example in which the terminal device performs measurement based on the measurement configuration 2.

Step 307: The terminal device sends the measurement report 2 to the source access network device. Correspondingly, the source access network device receives the measurement report 2 from the terminal device.

Step 307 is an optional step.

The measurement report 2 includes information about at least one beam, and the information about the at least one beam is briefly referred to as indication information of a second beam set below. It may be understood that a beam indicated by the indication information of the second beam set is a beam that meets the preset condition and that is measured by the terminal device. After the terminal device reports the indication information of the second beam set to a network side, a candidate access network device on the network side can more accurately determine one or more beams used to deliver a PDCCH to schedule the uplink resource, without a need to send the PDCCH on all beams in the candidate cell of the candidate access network device. Therefore, the indication information of the second beam set is used by the at least one candidate access network device to determine the beam for sending the PDCCH to the terminal device.

Optionally, beams included in the second beam set are different from beams included in the first beam set. In an example, the beams included in the second beam set are not completely the same as the beams included in the first beam set. For example, the first beam set includes a beam 1 and a beam 2 in a cell 1, and the second beam set includes the beam 2 and a beam 3 in the cell 1. In another example, beams included in the second beam set are completely different from beams included in the first beam set. For example, the first beam set includes a beam 1 and a beam 2 in a cell 1, and the second beam set includes a beam 3 and a beam 4 in the cell 1. Compared with the first beam set, the second beam set includes more up-to-date indication information of beams. Therefore, this helps the candidate access network device determine more suitable beams for PDCCH sending for the terminal device based on the up-to-date indication information of the second beam set instead of based on the possibly expired or invalid indication information of the first beam set.

Optionally, the indication information of the second beam set includes an index (index) of each beam in the second beam set. Optionally, the indication information of the second beam set further includes a cell identifier corresponding to each beam in the second beam set. Optionally, the indication information of the second beam set further includes signal quality information of each beam in the second beam set. For an explanation of the indication information of the second beam set, refer to descriptions of indication information of the at least one beam in step 203. Details are not described herein again.

The terminal device performs measurement based on the measurement configuration 2. A specific measurement process of the terminal device varies with content included in the measurement configuration 2. The following separately provides example descriptions.

In an implementation, the measurement configuration 2 does not include the indication information of the reference beam and the reference threshold. If the measurement configuration 2 includes a cell identifier of a candidate cell that needs to be measured by the terminal device, the terminal device reports a beam with optimal signal quality in a measured beam in the candidate cell. For example, the terminal device reports a beam with optimal signal quality in a plurality of currently measured beams. Optionally, if the terminal device continuously performs measurement, and a beam that has optimal signal quality and that is measured by the terminal device in a subsequent measurement process changes, the terminal device may report again the beam that has the optimal signal quality and that is currently measured. Optionally, the terminal device may periodically report an optimal measured beam. In other words, in this example, the terminal device may perform step 307 a plurality of times, to be specific, report the measurement report 2 a plurality of times. The measurement report 2 reported each time includes indication information of a beam with optimal signal quality measured when the terminal device sends the measurement report 2. For example, at a moment T1, if the terminal device learns through measurement that a beam 1 in a neighboring cell A has optimal signal quality, the terminal device sends, to the source access network device, a measurement report 2 that carries indication information of the beam 1 in the neighboring cell A; and at a moment T1+ΔT, if the terminal device learns through measurement that a beam 2 in the neighboring cell A has optimal signal quality, the terminal device sends, to the source access network device, a measurement report 2' that carries indication information of the beam 2 in the neighboring cell A.

In another implementation, the measurement configuration 2 includes the indication information of the reference beam, but does not include the reference threshold. In an example, the terminal device may report indication information of one beam. For example, when the beam that has the optimal signal quality and that is measured by the terminal device is different from the reference beam, the terminal device reports the beam with the optimal signal quality. Optionally, if the terminal device continuously performs measurement, and a beam that has optimal signal quality and that is measured by the terminal device in a subsequent measurement process changes, the terminal device may report again the currently measured beam that has the optimal signal quality. In another example, the terminal device may alternatively report indication information of a plurality of beams. For example, the terminal device reports, to the source access network device, all beams that have better measured signal quality than the reference beam. Optionally, if the terminal device continuously performs measurement, and a beam that has better signal quality than the reference beam and that is measured by the terminal device in a subsequent measurement process changes, the terminal device may report again the beam that has better signal quality than the reference beam and that is currently measured.

In another implementation, the measurement configuration 2 includes the reference threshold, but does not include the indication information of the reference beam. The terminal device reports a measured beam that satisfies the reference threshold in a cell. To be specific, the terminal device reports a beam whose signal quality is greater than the reference threshold in a measured beam in a cell A, and reports a beam whose signal quality is greater than the reference threshold in a measured beam in a cell B. The beam whose signal quality is greater than the reference threshold may be one beam, or may be a plurality of beams. Optionally, if the terminal device continuously performs measurement, and the beam that satisfies the reference threshold changes relative to a beam reported last time, the terminal device reports, to the source access network device, an updated beam that satisfies the reference threshold. Optionally, when learning through measurement that a beam is different from the beam reported last time, the terminal device may report the updated beam to the source access network device; or only when learning through measurement that a plurality of beams are all different from the beam reported last time, the terminal device may report the plurality of updated beams to the source access network device. Optionally, if the measurement configuration 2 includes the reference threshold and the cell identifier, it indicates that the terminal device learns through measurement that a beam in a cell with the cell identifier satisfies the reference threshold, and reports the beam that satisfies the reference threshold. Optionally, the terminal may be configured to periodically make a report, and report, in each periodicity, a beam that satisfies the reference threshold. When no beam satisfies the threshold, the terminal makes no report.

In another implementation, the measurement configuration 2 includes the reference threshold and the indication information of the reference beam. The terminal device reports, to the source access network device, a beam among measured beams that satisfies the reference threshold but not a reference beam. Optionally, the indication information of the reference beam indicates a plurality of reference beams. In an example, the terminal device learns through measurement that a plurality of beam results satisfy the reference threshold. When none of the plurality of measured beams is within a range of the reference beam, the terminal device triggers reporting of indication information of the plurality of measured beams to the source access network device. In another example, when the terminal device learns through measurement that the at least one beam satisfies the reference threshold, and one or more of measured beams are not within a range of the reference beam, the terminal device triggers reporting of indication information of the measured beam to the source access network device.

It should be noted that, in the foregoing examples, the beam with optimal signal quality may be a beam with a largest RSRQ value, or may be a beam with a largest RSRP value, or may be a beam with a largest SINR value, or may be a beam with optimal comprehensively evaluated signal quality. This is not limited herein.

Step 308: The source access network device sends a message 1 to the at least one candidate access network device. Correspondingly, the at least one candidate access network device receives the message 1 from the source access network device.

The message 1 includes indication information of at least one beam. The indication information of the at least one beam in the message 1 may be the indication information of the second beam set, or may be indication information that is of a beam and that is determined by the source access network device based on the indication information of the second beam set, or may be indication information that is of a beam and that is determined by the source access network device based on the indication information of the first beam set and the indication information of the second beam set, or may be indication information that is of a beam and that is determined by the source access network device based on another factor. This is not limited herein. An example in which the message 1 includes the indication information of the second beam set is used below for description.

It should be noted that the message 1 may be a newly defined message, or may be a message in a conventional technology. This is not limited herein.

For example, the source access network device sends indication information of a beam to three candidate access network devices. The three candidate access network devices include a candidate access network device A, a candidate access network device B, and a candidate access network device C. The candidate access network device A includes a cell 1 and a cell 2, the candidate access network device B includes a cell 3, and the candidate access network device includes a cell 4. The source access network device needs to send indication information of a beam in the cell 1 and indication information of a beam in the cell 3.

In an example, the source access network device sends a message 1-1 to a candidate access network device 1, sends a message 1-2 to a candidate access network device 2, and does not send a message to a candidate access network device 3. The message 1-1 includes the indication information of the beam in the cell 1, and the message 1-2 includes the indication information of the beam in the cell 3.

In another example, the source access network device separately sends a message 1-3 to a candidate access network device 1 and a candidate access network device 2, and does not send a message to a candidate access network device 3. The message 1-3 includes the indication information of the beam in the cell 1 and the indication information of the beam in the cell 3.

In another example, the source access network device separately sends a message 1-4 to a candidate access network device 1, a candidate access network device 2, and a candidate access network device 3. The message 1-4 includes the indication information of the beam in the cell 1 and the indication information of the beam in the cell 3.

Step 309: The at least one candidate access network device sends a PDCCH to the terminal device based on the message 1.

For example, the at least one candidate access network device sends the PDCCH to the terminal device based on indication information of at least one beam in the message 1.

Optionally, the candidate access network device sends the PDCCH through a beam that is in a cell that belongs to the candidate access network device and that is in the indication information of the at least one beam. The PDCCH indicates an uplink resource allocated to the terminal device. For example, the uplink resource is a PUSCH, and the PDCCH indicates a time-frequency domain position of the PUSCH.

Step 310: The terminal device monitors the PDCCH on a beam in a target cell, to obtain the uplink resource.

The terminal device measures the MO corresponding to the CHO based on the measurement configuration. When the terminal device learns through measurement of a target cell that satisfies a conditional handover event, the terminal device monitors the PDCCH on a beam that belongs to the target cell in the second beam set, and obtains the uplink resource such as the PUSCH based on the monitored PDCCH.

Step 311: The terminal device sends uplink data to the target access network device based on the uplink resource.

Step 311 is an optional step.

The target access network device is one of the at least one candidate access network device.

For example, the terminal device sends the uplink data to the target access network device through the PUSCH indicated by the PDCCH.

In the conventional technology, the source access network device may send the indication information of the first beam set to the at least one candidate access network device through the handover request message, so that the candidate access network device schedules the uplink resource for the terminal based on the indication information of the first beam set. It is not considered that when the terminal device triggers a handover, the optimal beam measured by the terminal device may have changed. In other words, the first beam set may not include the optimal beam currently measured by the terminal device. However, in this embodiment, the terminal device can report the indication information of the second beam set to the source access network device. The indication information of the second beam set indicates a latest (or new) beam currently measured by the terminal device, and is a beam that can accurately reflect a position at which the terminal device is located. After the candidate access network device receives the indication information of the second beam set from the source access network device, the candidate access network device can more accurately determine, based on the indication information of the second beam set, one or more beams used to deliver the PDCCH, without a need to send the PDCCH on all beams in the candidate cell of the candidate access network device. Therefore, this helps improve flexibility of scheduling the uplink resource by the candidate access network device for the terminal device, and can also reduce a resource waste to some extent. In addition, when the beam that is in the candidate cell and that is measured by the terminal device changes, the beam for delivering the PDCCH can still be accurately determined, thereby improving delivery accuracy of a base station. In this way, the terminal device obtains an uplink resource by decoding the PDCCH in advance, thereby reducing a handover delay and improving handover efficiency.

In addition, when the beams included in the second beam set are different from the beams included in the first beam set, compared with the first beam set, the second beam set includes more up-to-date indication information of beams. Therefore, this helps the candidate access network device determine more suitable beams for the terminal device for PDCCH sending based on the more up-to-date indication information of the second beam set instead of based on the possibly expired or invalid indication information of the first beam set. This helps improve accuracy of scheduling the uplink resource by the candidate access network device for the terminal device, and reduce a waste of resources.

FIG. 4 is a flowchart of another embodiment of a communication method according to this application. In this embodiment, a candidate access network device may pre-allocate an uplink resource to a terminal device on a part of beams, and indicate the terminal device to monitor a PDCCH on the other part of beams to obtain the uplink resource. Specifically, the terminal device and the candidate access network device perform the following steps.

Step 401: The candidate access network device sends first indication information and resource configuration information. Correspondingly, the terminal device receives the first indication information and the resource configuration information.

For example, the candidate access network device sends the first indication information and the resource configuration information to the terminal device through a source access network device. Correspondingly, the terminal device receives the first indication information and the resource configuration information from the candidate access network device through the source access network device.

The candidate access network device is an access network device that is determined by the source access network device for the terminal device and that may provide a service for the terminal device after a handover. For example, the candidate access network device is an access network device that receives a handover request (handover request) message from the source access network device and returns a handover request acknowledgement (handover request acknowledge) message to the source access network device. Optionally, the candidate access network device may alternatively be a target access network device, namely, an access network device that provides a service for the terminal device after the handover. For example, if the terminal device is handed over to the candidate access network device, the candidate access network device is the target access network device.

For example, the candidate access network device sends the handover request acknowledgement message to the source access network device. The handover request acknowledgement message includes the first indication information and the resource configuration information. The source access network device transparently transmits the first indication information and the resource configuration information to the terminal device through an RRC reconfiguration message.

The first indication information indicates the terminal device to use random access channel less RACH-less for the handover.

The resource configuration information indicates an initial uplink resource to be used by the terminal device to send uplink data to a candidate cell during the RACH-less handover. For example, the resource configuration information indicates a pre-allocated uplink resource (for example, a CG resource) and a dynamically allocated uplink resource (for example, a DG resource) that may be used by the terminal device to access the candidate cell.

Optionally, the resource configuration information indicates a pre-allocated uplink resource of a third beam set of the candidate cell, and indicates to monitor the PDCCH on a beam in a fourth beam set of the candidate cell, to obtain the dynamically allocated uplink resource. For example, the PDCCH indicates a time-frequency domain position of the dynamically allocated uplink resource (for example, a time-frequency domain position of the DG resource). The third beam set includes at least one beam in the candidate cell, and is a subset of a plurality of beams included in the candidate cell. The fourth beam set includes at least one beam in the candidate cell, and is a subset of a plurality of beams included in the candidate cell. Optionally, any beam in the third beam set is different from any beam in the fourth beam set. In other words, an intersection set between the third beam set and the fourth beam is empty.

It may be understood that the resource configuration information is used to configure a CG resource corresponding to a part of beams in the candidate cell, and indicates a DG resource indicated by delivering the PDCCH on the other part of beams in the candidate cell. It may also be understood that the resource configuration information indicates a specific beam that is in the candidate cell and on which the terminal device uses the CG resource, and a beam that is in the candidate cell and on which the terminal device monitors the PDCCH to obtain the DG resource.

For example, the candidate cell includes at least a beam 1, a beam 2, a beam 3, and a beam 4. If the third beam set includes the beam 1 and the beam 2, and the fourth beam set includes the beam 3 and the beam 4, it indicates that the resource configuration information indicates that the CG resource is configured on the beam 1 and the beam 2, and indicates the terminal device to monitor the PDCCH on the beam 3 and the beam 4, to obtain the DG resource. In this example, the terminal device may learn, based on the received resource configuration information, of the CG resource that may be used on the beam 1 or the beam 2, or may monitor the PDCCH on the beam 3 or the beam 4, to obtain the DG resource used on the beam 3 or the beam 4.

Optionally, the resource configuration information is a cell-level configuration, and one candidate cell of the candidate access network device corresponds to one piece of resource configuration information. Optionally, different candidate cells of the candidate access network device correspond to different resource configuration information.

Further, the resource configuration information includes one or more of the following: indication information of the third beam set, information about a pre-allocated uplink resource corresponding to each beam in the third beam set, a mapping relationship between the beam in the third beam set and the pre-allocated uplink resource, and indication information of the fourth beam set. The indication information of the third beam set includes an index of each beam in the third beam set, and the indication information of the fourth beam set includes an index of each beam in the fourth beam set. The information about the pre-allocated uplink resource corresponding to each beam in the third beam set includes time-frequency domain position information of the pre-allocated uplink resource corresponding to each beam. For example, if the candidate cell includes at least a beam 1, a beam 2, a beam 3, and a beam 4, the third beam set includes the beam 1 and the beam 2, and the fourth beam set includes the beam 3 and the beam 4, the indication information of the third beam set in the resource configuration information is an index of the beam 1 and an index of the beam 2, and the indication information of the fourth beam set in the resource configuration information is an index of the beam 3 and an index of the beam 4. In addition, the resource configuration information further includes time-frequency domain position information of a pre-allocated uplink resource 1 corresponding to the index of the beam 1 and time-frequency domain position information of a pre-allocated uplink resource 2 corresponding to the index of the beam 2.

It should be noted that the mapping relationship between the beam in the third beam set and the pre-allocated uplink resource may be explicitly carried in the resource configuration information, or may be implicitly carried in the resource configuration information. For example, the mapping relationship between the beam in the third beam set and the pre-allocated uplink resource may be implicitly indicated based on the indication information of the third beam and the information about the pre-allocated uplink resource corresponding to each beam in the third beam set.

Optionally, the resource configuration information further includes information about a RACH resource, for example, time-frequency domain position information of the RACH resource.

For example, if the candidate cell includes a total of five beams: a beam 1, a beam 2, a beam 3, a beam 4, and a beam 5, the resource configuration information may include a pre-allocated uplink resource associated with the beam 1 and the beam 2 in the third beam set, and the fourth beam set includes the RACH resource, and indication information indicating to monitor the PDCCH on the beam 3 and the beam 4 to obtain the pre-allocated uplink resource.

Optionally, the resource configuration information further includes at least one threshold, and the threshold indicates that a beam is an available beam when signal quality of the beam is greater than the threshold.

In an example, the threshold included in the resource configuration information is a threshold of a resource type granularity. To be specific, a same threshold is used for resources of a same type, and different thresholds are used for resources of different types. For example, the threshold is a first threshold (which may also be referred to as a first threshold corresponding to the CG resource) used by the terminal device to select a beam when sending the uplink data on the pre-allocated uplink resource and/or a second threshold (which may also be referred to as a second threshold corresponding to the DG resource) used by the terminal device to select a beam to monitor the PDCCH to obtain the dynamically allocated uplink resource. The first threshold and the second threshold may have a same value or may have different values.

In another example, the threshold included in the resource configuration information is a threshold of a beam granularity. To be specific, one threshold is configured for each beam, and different beams correspond to different thresholds. For example, the resource configuration information includes a third threshold corresponding to each beam in the third beam set and/or a fourth threshold corresponding to each beam in the fourth beam set.

In another example, the threshold included in the resource configuration information is a threshold of a beam set granularity. For example, the third beam set is corresponding to one threshold, and the fourth beam set is corresponding to another threshold. For example, the resource configuration information includes the threshold corresponding to the third beam set and/or the threshold corresponding to the fourth beam set.

In addition, a message carrying the first indication information and the resource configuration information further includes indication information. The indication information indicates the terminal device to preferentially use the pre-allocated uplink resource (for example, the CG resource), or the terminal device preferentially obtains the dynamically allocated uplink resource (for example, the DG resource) by monitoring the PDCCH. In an example, the message carrying the first indication information and the resource configuration information further includes second indication information, and the second indication information indicates the terminal device to preferentially use the pre-allocated uplink resource. In another example, the message carrying the first indication information and the resource configuration information further includes third indication information, and the third indication information indicates the terminal device to preferentially obtain the DG resource by monitoring the PDCCH.

It should be noted that if the source access network device determines, for the terminal device, a plurality of candidate access network devices that may provide services for the terminal device after the handover, at least one of the plurality of candidate access network devices sends a first message to the terminal device. When a plurality of the plurality of candidate access network devices send the first message to the terminal device, resources configured based on resource configuration information in first messages from different candidate access network devices are different. For example, resource configuration information in a first message from a candidate access network device 1 is used to configure a resource of a specific candidate cell of the candidate access network device 1, and resource configuration information in a first message from a candidate access network device 2 is used to configure a resource of a specific candidate cell of the candidate access network device 2.

Step 402: The terminal device determines, based on the resource configuration information, a target beam and/or an uplink resource corresponding to the target beam from at least one measured beam.

Before triggering the handover, the terminal device can measure at least one beam in at least one neighboring cell, and the at least one neighboring cell includes the candidate cell of the candidate access network device.

In a possible implementation 1, if at least one beam that is in the candidate cell and that is measured by the terminal device belongs to the third beam set, the terminal device determines one of the at least one beam as the target beam, and determines that a CG resource corresponding to the target beam is the uplink resource corresponding to the target beam. For example, if at least one of a beam that meets a handover condition and that is measured by the terminal device belongs to the third beam set, the terminal device determines one of the at least one beam as the target beam. Because the at least one beam belongs to the third beam set, the target beam determined from the at least one beam also belongs to the third beam set, and the target beam has the CG resource configured by the candidate access network device. For example, if the terminal device learns through measurement that a total of three beams, namely, a beam 1, a beam 2, and a beam 3, meet the handover condition, and all the three beams belong to the third beam set of the candidate cell, the terminal device selects one beam from the three beams as the target beam, and determines that the CG resource corresponding to the target beam is the uplink resource corresponding to the target beam.

Optionally, the terminal device may determine a beam with optimal signal quality in the at least one beam as the target beam, or may randomly determine one of the at least one beam as the target beam, or may determine, based on other information, one of the at least one beam as the target beam.

In an example, the resource configuration information further includes the first threshold corresponding to the CG resource. The terminal device determines a beam with signal quality greater than or equal to the first threshold in the at least one beam as the target beam. For example, the terminal device learns through measurement that a total of three beams, namely, a beam 1, a beam 2, and a beam 3, meet the handover condition, and all the three beams belong to the third beam set of the candidate cell. If signal quality of the beam 1 is greater than the first threshold, signal quality of the beam 2 is greater than the first threshold, and signal quality of the beam 3 is less than the first threshold, the terminal device determines one of the beam 1 and the beam 2 as the target beam.

In another example, the resource configuration information further includes a third threshold corresponding to each beam in the third beam set. The terminal device determines that a beam with signal quality greater than or equal to the third threshold corresponding to the beam in the at least one beam as the target beam. For example, the terminal device learns through measurement that a total of three beams, namely, a beam 1, a beam 2, and a beam 3, meet the handover condition, and all the three beams belong to the third beam set of the candidate cell. The beam 1 corresponds to a third threshold 1, the beam 2 corresponds to a third threshold 2, and the beam 3 corresponds to a third threshold 3. If signal quality of the beam 1 is greater than the third threshold 1, signal quality of the beam 2 is less than the third threshold 2, and signal quality of the beam 3 is less than the third threshold 3, the terminal device determines the beam 1 as the target beam.

In another possible implementation 2, if at least one beam that is in the candidate cell and that is measured by the terminal device belongs to the fourth beam set, the terminal device determines one of the at least one beam as the target beam, and monitors the PDCCH on the target beam. A DG resource indicated by the PDCCH is the uplink resource corresponding to the target beam. For example, if at least one of the beam that meets the handover condition and that is measured by the terminal device belongs to the fourth beam set, the terminal device determines one of the at least one beam as the target beam. Because the at least one beam belongs to the fourth beam set, the target beam determined from the at least one beam also belongs to the fourth beam set, and the candidate access network device delivers the PDCCH on the target beam, to indicate a dynamic uplink grant resource (namely, a DG resource) available to the terminal device. For example, if the terminal device learns through measurement that a total of three beams, namely, a beam 1, a beam 2, and a beam 3, meet the handover condition, and all the three beams belong to the fourth beam set of the candidate cell, the terminal device selects one beam from the three beams as the target beam, and monitors the PDCCH on the target beam, to obtain a DG resource corresponding to the target beam.

Optionally, the terminal device may determine a beam with optimal signal quality in the at least one beam as the target beam, or may randomly determine one of the at least one beam as the target beam, or may determine, based on other information, one of the at least one beam as the target beam.

In an example, the resource configuration information further includes a second threshold corresponding to the DG resource indicated by the PDCCH. The terminal device determines a beam with signal quality greater than or equal to the second threshold in the at least one beam as the target beam. For example, the terminal device learns through measurement that a total of three beams, namely, a beam 1, a beam 2, and a beam 3, meet the handover condition, and all the three beams belong to the fourth beam set of the candidate cell. If signal quality of the beam 1 is greater than the second threshold, signal quality of the beam 2 is greater than the second threshold, and signal quality of the beam 3 is less than the second threshold, the terminal device determines one of the beam 1 and the beam 2 as the target beam.

In another example, the resource configuration information further includes a fourth threshold corresponding to each beam in the fourth beam set. The terminal device determines a beam with signal quality greater than or equal to the fourth threshold corresponding to the beam in the at least one beam as the target beam. For example, the terminal device learns through measurement that a total of three beams, namely, a beam 1, a beam 2, and a beam 3, meet the handover condition, and all the three beams belong to the fourth beam set of the candidate cell. The beam 1 corresponds to a fourth threshold 1, the beam 2 corresponds to a fourth threshold 2, and the beam 3 corresponds to a fourth threshold 3. If signal quality of the beam 1 is greater than a fourth threshold 1, signal quality of the beam 2 is less than a fourth threshold 2, and signal quality of the beam 3 is less than a fourth threshold 3, the terminal device determines the beam 1 as the target beam.

In another possible implementation 3, if at least one beam that is in the candidate cell and that is measured by the terminal device belongs to the third beam set, and at least one beam that is in the candidate cell and that is measured by the terminal device belongs to the fourth beam set, the terminal device determines a beam in the third beam set as the target beam, and determines that a CG resource corresponding to the target beam is the uplink resource corresponding to the target beam. In other words, when a part of beams that meet the handover condition and that are measured by the terminal device belong to the third beam set and the other part of the beams belong to the fourth beam set, the terminal device preferentially determines the target beam from beams that belong to the third beam set.

For example, if the terminal device learns through measurement that a total of four beams, namely, a beam 1, a beam 2, a beam 3, and a beam 4, meet the handover condition, the beam 1 and the beam 2 belong to the third beam set, and the beam 3 and the beam 4 belong to the fourth beam set, the terminal device determines one of the beam 1 and the beam 2 as the target beam.

Specifically, for a manner in which the terminal device determines the target beam from at least one beam that belongs to the third beam set, refer to related descriptions in the implementation 1. Details are not described herein again.

In another possible implementation 4, if at least one beam that is in the candidate cell and that is measured by the terminal device does not belong to the third beam set and does not belong to the fourth beam set, the terminal device determines one of the at least one beam as the target beam, and triggers a random access channel procedure on the RACH resource. Optionally, the terminal device triggers the random access channel procedure on a beam on which the RACH resource is configured in the at least one beam, to obtain, through the random access channel procedure, uplink scheduling information delivered by the candidate access network device.

In another possible implementation 5, the first message further includes second indication information, and the second indication information indicates the terminal device to preferentially use the CG resource. If at least one beam that is in the candidate cell and that is measured by the terminal device belongs to the third beam set, and at least one beam in the candidate cell belongs to the fourth beam set, the terminal device determines, based on the second indication information, one of the at least one beam that belongs to the third beam set as the target beam, and determines a CG resource corresponding to the target beam as the uplink resource corresponding to the target beam.

For example, if the terminal device learns through measurement that a total of four beams, namely, a beam 1, a beam 2, a beam 3, and a beam 4, meet the handover condition, the beam 1 and the beam 2 belong to the third beam set, and the beam 3 and the beam 4 belong to the fourth beam set, because the first message received by the terminal device carries indication information (namely, the second indication information) indicating to preferentially use the CG resource, the terminal device determines, based on the second indication information, one of the beam 1 and the beam 2 that belong to the third beam set as the target beam.

In another possible implementation 6, the first message further includes third indication information, and the third indication information indicates the terminal device to preferentially obtain the DG resource by monitoring the PDCCH. If at least one beam that is in the candidate cell and that is measured by the terminal device belongs to the third beam set, and at least one beam in the candidate cell belongs to the fourth beam set, the terminal device determines one of the at least one beam that belongs to the fourth beam set as the target beam, and monitors the PDCCH on the target beam. A DG resource indicated by the PDCCH is the uplink resource corresponding to the target beam.

For example, if the terminal device learns through measurement that a total of four beams, namely, a beam 1, a beam 2, a beam 3, and a beam 4, meet the handover condition, the beam 1 and the beam 2 belong to the third beam set, and the beam 3 and the beam 4 belong to the fourth beam set, because the first message received by the terminal device carries indication information (namely, the third indication information) indicating to preferentially use the DG resource, the terminal device determines, based on the third indication information, one of the beam 3 and the beam 4 that belong to the fourth beam set as the target beam.

In another possible implementation 7, the terminal device determines a beam with optimal signal quality in the at least one measured beam in the candidate cell as the target beam. The beam with optimal signal quality may be a beam with a largest RSRQ value, or may be a beam with a largest RSRP value, or may be a beam with a largest SINR value, or may be a beam with optimal comprehensively evaluated signal quality. This is not limited herein.

If the target beam belongs to the third beam set, the terminal device determines that a CG resource corresponding to the target beam is the uplink resource corresponding to the target beam; or if the target beam belongs to the fourth beam set, the terminal device monitors the PDCCH on the target beam, where a DG resource indicated by the PDCCH is the uplink resource corresponding to the target beam; or if the target beam does not belong to the third beam set and does not belong to the fourth beam set, the terminal device triggers a random access channel procedure on the target beam on the RACH resource.

For example, if the candidate cell includes a total of five beams, namely, a beam 1, a beam 2, a beam 3, a beam 4, and a beam 5, the third beam set includes the beam 1 and the beam 2, and the fourth beam set includes the beam 3 and the beam 4, the terminal device may further configure the RACH resource for the beam 5. If the terminal device learns through measurement that a beam that meets the handover condition and that has optimal signal quality is a beam that belongs to the third beam set, for example, the beam with optimal signal quality is the beam 1, the terminal device determines the beam 1 as the target beam, and a CG resource corresponding to the beam 1 is the uplink resource corresponding to the target beam. If the terminal device learns through measurement that a beam that meets the handover condition and that has optimal signal quality is a beam that belongs to the fourth beam set, for example, the beam with optimal signal quality is the beam 3, the terminal device determines the beam 3 as the target beam, and a DG resource obtained by the terminal device by monitoring the PDCCH on the beam 3 as the uplink resource corresponding to the target beam. If the terminal device learns through measurement that a beam that meets the handover condition and that has optimal signal quality does not belong to the third beam set and does not belong to the fourth beam set, for example, the beam with optimal signal quality is the beam 5, the terminal device determines the beam 5 as the target beam, and the terminal device triggers the random access channel procedure on a RACH resource corresponding to the beam 5.

In this embodiment, the candidate access network device can configure a plurality of uplink grant manners for the terminal device in a candidate cell. In other words, in a candidate cell, a third beam set for which the CG resource is used is configured, and a fourth beam set for indicating the DG resource by delivering the PDCCH is indicated. Therefore, this helps improve flexibility of configuring the uplink resource by the candidate access network device. In addition, compared with a conventional technology in which a candidate access network device configures a CG resource for each beam in a candidate cell, the solution in this embodiment reduces a quantity of to-be-configured CG resources, and helps reduce a resource waste.

With reference to FIG. 5, the following further describes the communication method provided in this application. FIG. 5 is a flowchart of an embodiment of a communication method according to this application in a RACH-less handover scenario. In this embodiment, a terminal device, a source access network device, and a candidate access network device perform the following steps.

Step 501: The source access network device sends a measurement configuration 1 to the terminal device. Correspondingly, the terminal device receives the measurement configuration 1 from the source access network device.

Step 502: The terminal device sends a measurement report 1 to the source access network device. Correspondingly, the source access network device receives the measurement report 1 from the terminal device.

Step 503: The source access network device sends a handover request message to at least one candidate access network device. Correspondingly, the at least one candidate access network device receives the handover request message from the source access network device.

Optionally, the handover request message includes a beam-level measurement result measured by the terminal device, and the beam-level measurement result includes indication information of at least one beam. For example, the beam-level measurement result is indication information that is of at least one beam and that is carried in the measurement report 1 in step 502.

Optionally, the indication information of the at least one beam includes an index (index) of each of the at least one beam.

Optionally, the indication information of the at least one beam further includes a cell identifier corresponding to each of the at least one beam.

Optionally, the indication information of the at least one beam further includes signal quality information of each of the at least one beam.

Step 501 to step 503 are similar to step 301 to step 303. For details, refer to related descriptions in step 301 to step 303. Details are not described herein again.

Step 504: The candidate access network device sends a handover request acknowledgement message to the source access network device. Correspondingly, the source access network device receives the handover request acknowledgement message from the candidate access network device.

The handover request acknowledgement message includes first indication information and resource configuration information. For descriptions of the first indication information and the resource configuration information, refer to step 401. Details are not described herein again.

Optionally, the candidate access network device receives the beam-level measurement result measured by the terminal device, where the beam-level measurement result includes the indication information of the at least one beam; and the candidate access network device determines indication information of a third beam set and/or indication information of a fourth beam set based on the beam-level measurement result. For example, the candidate access network device determines that a beam with good signal quality in the beam-level measurement result is used to form the third beam set, and a beam with second optimal signal quality in the beam-level measurement result is used to form the fourth beam set. For example, the candidate access network device sorts beams in the beam-level measurement results in descending order of signal quality, selects first one or more beams with good signal quality to determine the third beam set, and then selects first one or more beams with good quality from a plurality of remaining beams to determine the fourth beam set.

Optionally, the handover request acknowledgement message is a conditional handover request acknowledgement (Handover Request ACK) message. After the source access network device sends the conditional handover request (Handover Request) message to the at least one candidate access network device, if a candidate cell of the candidate access network device successfully admits the terminal device, the candidate access network device sends the conditional handover request acknowledgement message to the source access network device.

Step 505: The source access network device sends an RRC reconfiguration message to the terminal device. Correspondingly, the terminal device receives the RRC reconfiguration message from the source access network device.

The RRC reconfiguration message includes first indication information and resource configuration information of one or more candidate cells.

The RRC reconfiguration information indicates the terminal device to perform a handover, or the terminal device evaluates the candidate cell and determines a target cell to perform a handover.

The resource configuration information indicates a pre-allocated uplink resource of a third beam set of the candidate cell, and indicates to monitor a PDCCH on a beam in a fourth beam set of the candidate cell, to obtain a dynamically allocated uplink resource. For example, the PDCCH indicates a time-frequency domain position of the dynamically allocated uplink resource (for example, a time-frequency domain position of a DG resource).

Optionally, the resource configuration information includes a RACH resource, or the RRC reconfiguration message includes a RACH resource. Optionally, the RACH resource may be a contention-based RACH resource.

Step 506: The terminal device sends uplink data on a target beam determined based on the resource configuration information.

A cell in which the terminal device performs a handover is referred to as a target cell, and the target cell is one of the candidate cell. In a conventional handover, the RRC reconfiguration message includes only one candidate cell, and the candidate cell is the target cell. In a CHO handover, the terminal device selects one of one or more candidate cells as the target cell.

In a handover process, the terminal device determines, based on resource configuration information of the target cell, a target beam and/or an uplink resource corresponding to the target beam from at least one measured beam.

The uplink data may be a handover complete message (namely, RRC reconfiguration complete).

The terminal device may select a beam based on a latest non-filtered physical layer measurement result, or may select a beam based on a filtered physical layer measurement result, or may select a beam based on a measurement result obtained through L3 filtering. This is not limited in this application.

Optionally, the terminal device measures the target cell before triggering the handover or in the handover process, to obtain a measurement result of one or more beams in the target cell.

Optionally, during the handover, the terminal device determines, based on a resource configuration and a latest measurement result that is of the target cell and that is stored by the terminal device, a target beam to send the uplink data.

In a possible implementation 1, if the at least one beam that is in the target cell and that is measured by the terminal device belongs to the third beam set, the terminal device determines one of the at least one beam as the target beam, and sends the uplink data on a CG resource corresponding to the target beam. For example, if the CG resource is configured for the at least one beam that is in the target cell and that is measured by the terminal device, the terminal device sends the uplink data on one of the at least one beam on the CG resource.

In an example, the resource configuration information includes a first threshold corresponding to the CG resource, and the terminal device determines a beam with signal quality greater than or equal to the first threshold in the at least one beam as the target beam. For example, if the CG resource is configured for the at least one beam that is in the target cell and that is measured by the terminal device, and signal quality of at least one beam is greater than or equal to the first threshold, the terminal device considers that the at least one beam is an available (available) beam, and the terminal device selects one of the available beam as the target beam, and sends the uplink data on a CG resource corresponding to the target beam. Optionally, the terminal device selects a beam with optimal signal quality as a target beam, and sends uplink data on a CG resource corresponding to the target beam. If at least one beam that is in the target cell measured by the terminal device and for which the CG resource is configured is less than or equal to the first threshold, the terminal device may randomly select a beam or select a beam with optimal signal quality, and trigger a random access channel procedure on the RACH resource. For example, the terminal device selects one beam from the at least one beam to perform the random access channel procedure, to obtain, through the random access channel procedure, uplink scheduling information delivered by the candidate access network device. Optionally, the terminal device may select the beam with optimal signal quality to perform the RACH procedure.

In another example, the resource configuration information further includes a third threshold corresponding to each beam in the third beam set. The terminal device determines a beam with signal quality greater than or equal to the third threshold corresponding to the beam in the at least one beam as the target beam. For example, if the CG resource is configured for the at least one beam that is in the target cell and that is measured by the terminal device, and signal quality of at least one beam is greater than or equal to the third threshold corresponding to the beam, the terminal device considers that the at least one beam is an available beam, and the terminal device selects one of the available beam as the target beam, and sends the uplink data on a CG resource corresponding to the target beam.

In another example, the resource configuration information includes a first threshold and a fifth threshold that correspond to the CG resource. If a beam greater than or equal to the first threshold exists in one or more beams measured by the terminal device, the terminal device may select a CG resource corresponding to any beam to send the uplink data; or if a beam less than or equal to the first threshold and greater than or equal to the fifth threshold exists, the terminal device selects a beam with strongest signal quality and selects a corresponding CG resource to send the uplink data. If signal quality of a beam is less than or equal to the fifth threshold, the terminal device performs the RACH procedure.

In another possible implementation 2, if the at least one beam that is in the target cell and that is measured by the terminal device belongs to the fourth beam set, the terminal device determines one of the at least one beam to monitor the PDCCH, and sends the uplink data on a DG resource indicated by the PDCCH. For example, if at least one of a beam that meets a handover condition and that is measured by the terminal device belongs to the fourth beam set, the terminal device determines one of the at least one beam as the target beam. For example, if the at least one beam that is in the target cell and that is measured by the terminal device is a beam indicated for monitoring the PDCCH, the terminal monitors the PDCCH on one of the at least one beam to obtain the DG resource, and then sends the uplink data on the DG resource.

Optionally, the terminal device may determine to monitor the PDCCH on a beam with optimal signal quality in the at least one beam, or may randomly determine one beam from the at least one beam to monitor the PDCCH, or may determine, based on other information, one of the at least one beam as the target beam to monitor the PDCCH.

In an example, the resource configuration information further includes a second threshold corresponding to the DG resource indicated by the PDCCH. The terminal device determines a beam with signal quality greater than or equal to the second threshold in the at least one beam as the target beam. For example, if the at least one beam that is in the target cell and that is measured by the terminal device belongs to the fourth beam set (that is, the at least one beam is a beam for obtaining an uplink resource by monitoring the PDCCH), and signal quality of at least one beam is greater than or equal to the second threshold, the terminal device considers that the at least one beam is an available beam, and the terminal device selects one of the available beam as the target beam to monitor the PDCCH, and sends the uplink data on a DG resource obtained by monitoring the PDCCH.

In another example, the resource configuration information further includes a fourth threshold corresponding to each beam in the fourth beam set. The terminal device determines a beam with signal quality greater than or equal to the fourth threshold corresponding to the beam in the at least one beam as the target beam. For example, if the at least one beam that is in the target cell and that is measured by the terminal device belongs to the fourth beam set (that is, the at least one beam is a beam for obtaining an uplink resource by monitoring the PDCCH), and signal quality of at least one beam is greater than or equal to the fourth threshold corresponding to the beam, the terminal device considers that the at least one beam is an available beam, and the terminal device selects one of the available beam to monitor the PDCCH, and sends the uplink data on a DG resource obtained by monitoring the PDCCH.

In another example, the resource configuration information includes a second threshold and a sixth threshold that correspond to the DG resource. If a beam greater than or equal to the second threshold exists in one or more beams measured by the terminal device, the terminal device may select any beam to monitor the PDCCH, to obtain the DG resource, and send the uplink data on the DG resource; or if a beam less than or equal to the second threshold and greater than or equal to the sixth threshold exists, the terminal device selects a beam with strongest signal quality to monitor the PDCCH and sends the uplink data on the DG resource indicated by the PDCCH. If signal quality of a beam is less than or equal to the sixth threshold, the terminal device performs the RACH procedure.

In another possible implementation 3, if at least one beam that is in the target cell and that is measured by the terminal device belongs to the third beam set, and at least one beam that is in the target cell and that is measured by the terminal device belongs to the fourth beam set, the terminal device determines a beam in the third beam set as the target beam, and determines that a CG resource corresponding to the target beam is the uplink resource corresponding to the target beam. In other words, when the terminal device learns through measurement that the CG resource is configured for at least one beam, and learns through measurement that it is indicated to monitor the PDCCH on the at least one beam, the terminal device preferentially sends the uplink data on the beam for which the CG resource is pre-allocated.

For example, if a CG-based first threshold and a DG-based second threshold are configured, at least one beam greater than or equal to the first threshold in the target cell measured by the terminal device belongs to the third beam set, and at least one beam greater than or equal to the second threshold belongs to the fourth beam set, the terminal device determines a beam in the third beam set as the target beam, and determines a CG resource corresponding to the target beam as the uplink resource corresponding to the target beam.

Specifically, for a manner in which the terminal device determines the target beam from at least one beam that belongs to the third beam set, refer to related descriptions in the implementation 1. Details are not described herein again.

In another possible implementation 4, if a beam that is in the target cell and that is measured by the terminal device does not belong to the third beam set and does not belong to the fourth beam set, the terminal device determines one of the beam in the target cell as the target beam, and triggers the random access channel procedure on the RACH resource. Optionally, the terminal device selects one beam from the beam in the target cell to perform the random access channel procedure, to obtain, through the random access channel procedure, uplink scheduling information delivered by the candidate access network device. Optionally, the terminal device may select the beam with optimal signal quality to perform the RACH procedure.

In another possible implementation 5, the first message further includes second indication information, and the second indication information indicates the terminal device to preferentially use the CG resource. If at least one beam that is in the target cell and that is measured by the terminal device belongs to the third beam set, and at least one beam in the target cell belongs to the fourth beam set, the terminal device determines, based on the second indication information, one of the at least one beam that belongs to the third beam set as the target beam, and determines a CG resource corresponding to the target beam as the uplink resource corresponding to the target beam.

In another possible implementation 6, the first message further includes third indication information, and the third indication information indicates the terminal device to preferentially obtain the DG resource by monitoring the PDCCH. If at least one beam that is in the target cell and that is measured by the terminal device belongs to the third beam set, and at least one beam in the target cell belongs to the fourth beam set, the terminal device determines one of the at least one beam that belongs to the fourth beam set as the target beam, and monitors the PDCCH on the target beam. A DG resource indicated by the PDCCH is the uplink resource corresponding to the target beam. For examples in the implementation 4, the implementation 5, and the implementation 6, refer to related descriptions in step 402. Details are not described herein again.

It should be noted that the second indication information and the third indication information may be different values of same indication information. For example, "preferentially used resource" is {CG, DG}. When "preferentially used resource"= {CG} is delivered, it represents that the CG resource is preferentially used; or when "preferentially used resource"={DG} is delivered, it represents that the DG resource is preferentially used.

In another possible implementation 7, the terminal device determines a beam with optimal signal quality in the at least one beam that is in the measured target cell as the target beam. The beam with optimal signal quality may be a beam with a largest RSRQ value, or may be a beam with a largest RSRP value, or may be a beam with a largest SINR value, or may be a beam with optimal comprehensively evaluated signal quality. This is not limited herein.

If the target beam belongs to the third beam set, the terminal device determines that a CG resource corresponding to the target beam is the uplink resource corresponding to the target beam; or if the target beam belongs to the fourth beam set, the terminal device monitors the PDCCH on the target beam, where a DG resource indicated by the PDCCH is the uplink resource corresponding to the target beam; or if the target beam does not belong to the third beam set and does not belong to the fourth beam set, the terminal device triggers a random access channel procedure on the target beam on the RACH resource.

In another possible implementation 8, a beam that is in the target cell, that is measured by the terminal device, and for which the CG resource is configured does not meet a threshold, and a beam indicated for monitoring the PDCCH is not obtained through measurement; or the terminal device learns through measurement that the beam is indicated for monitoring the PDCCH, but does not meet a threshold, and the terminal device does not obtain through measurement the beam for which the CG resource is configured; or if the terminal device learns through measurement that the beam for which the CG is configured does not meet a CG threshold and learns through measurement that the beam for which the DG is configured does not meet a DG threshold, the terminal device selects a beam to perform the RACH procedure. The terminal device may select any beam to perform RACH, or select a beam with optimal beam quality to perform RACH.

It may be understood that when selecting a beam to send an uplink initial resource, the terminal device may determine, according to the foregoing embodiments, a beam used when the uplink resource is currently sent. For example, when the terminal device unsuccessfully selects a beam 1 to send the initial uplink resource according to the foregoing embodiments, and the terminal device needs to resend the initial uplink resource, the terminal device reselects, in a manner in the foregoing embodiments, a beam based on a beam currently obtained through measurement to send the uplink resource. The selected beam may be the same as or different from a beam used for sending a previous resource at a previous time. Alternatively, before the terminal device completes the handover or unsuccessfully performs the handover, each time the terminal device sends the uplink data to a target access network device, the terminal device needs to redetermine and select, in the manner in the foregoing embodiments, whether to use the CG resource, the DG resource, or the RACH resource for sending.

In this embodiment, the candidate access network device can configure a plurality of uplink grant manners for the terminal device in a target cell. In other words, in a target cell, a third beam set for which the CG resource is used is configured, and a fourth beam set for indicating the DG resource by delivering the PDCCH is indicated. Therefore, this helps improve flexibility of configuring the uplink resource by the candidate access network device. In addition, compared with a conventional technology in which a candidate access network device configures a CG resource for each beam in a target cell, the solution in this embodiment reduces a quantity of to-be-configured CG resources, and helps reduce a resource waste.

In correspondence to the solutions provided in the foregoing method embodiments, embodiments of this application further provide corresponding communication apparatuses (sometimes also referred to as communication devices) and a communication system. The communication apparatus includes a corresponding module or unit configured to perform each part in the foregoing embodiments. The module or unit may be software, hardware, or a combination of software and hardware. The following only briefly describes the communication apparatus and system. For implementation details of the solutions, refer to descriptions in the foregoing method embodiments. Details are not described below again.

FIG. 6 is a diagram of a structure of a communication apparatus 60 according to this application. It should be understood that the terminal device in the method embodiment corresponding to FIG. 2, FIG. 3, FIG. 4, or FIG. 5 may be based on the structure of the communication apparatus 60 shown in FIG. 6 in this embodiment.

The communication apparatus 60 includes at least one processor 601, at least one memory 602, and at least one transceiver 603. The processor 601, the memory 602, and the transceiver 603 are connected. Optionally, the communication apparatus 60 may further include an input device 605, an output device 606, and one or more antennas 604. The antenna 604 is connected to the transceiver 603, and the input device 605 and the output device 606 are connected to the processor 601.

In this embodiment, the memory 602 is mainly configured to store a software program and data. The memory 602 may exist independently, and is connected to the processor 601. Optionally, the memory 602 may be integrated with the processor 601, for example, integrated into one or more chips. The memory 602 can store program code for executing the technical solutions in embodiments of this application, and the processor 601 controls execution. Various types of executed computer program code may also be considered as drivers of the processor 601. It should be understood that FIG. 6 in this embodiment shows only one memory and one processor. However, during actual application, the communication apparatus 60 may include a plurality of processor or a plurality of memory. This is not specifically limited herein. In addition, the memory 602 may also be referred to as a storage medium, a storage device, or the like. The memory 602 may be a storage element (namely, an on-chip storage element) located on the same chip as the processor, or an independent storage element. This is not limited in embodiments of this application.

In this embodiment, the transceiver 603 may be configured to support receiving or sending of a radio frequency signal between the communication apparatus 60 and an access network device, and the transceiver 603 may be connected to the antenna 604. The transceiver 603 includes a transmitter Tx and a receiver Rx. Specifically, the one or more antennas 604 may receive the radio frequency signal. The receiver Rx in the transceiver 603 is configured to: receive the radio frequency signal from the antenna 604, convert the radio frequency signal into a digital baseband signal or a digital intermediate frequency signal, and provide the digital baseband signal or the digital intermediate frequency signal for the processor 601, so that the processor 601 further processes the digital baseband signal or the digital intermediate frequency signal, for example, performs demodulation processing and decoding processing. In addition, the transmitter Tx in the transceiver 603 is further configured to: receive a modulated digital baseband signal or digital intermediate frequency signal from the processor 601, convert the modulated digital baseband signal or digital intermediate frequency signal into a radio frequency signal, and send the radio frequency signal through the one or more antennas 604. Specifically, the receiver Rx may selectively perform one or more levels of down-mixing processing and analog-to-digital conversion processing on the radio frequency signal to obtain the digital baseband signal or the digital intermediate-frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

It should be understood that the transceiver 603 may also be referred to as a transceiver unit, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

The processor 601 may be a baseband processor, or may be a central processing unit (central processing unit, CPU). The baseband processor and the CPU may be integrated together or separated from each other. The processor 601 may be configured to implement various functions for the terminal device, for example, configured to process a communication protocol and communication data; or configured to: control the whole terminal device, execute a software program, and process data of the software program; or configured to assist in completing a computing processing task, for example, graphics and image processing or audio processing. Alternatively, the processor 601 is configured to implement one or more of the foregoing functions.

In addition, the output device 606 communicates with the processor 601, and may display information in a plurality of manners. This is not specifically limited herein.

In a design, the communication apparatus 60 is configured to perform the method of the terminal device in the embodiment corresponding to FIG. 2 or FIG. 3. The transceiver 603 in the communication apparatus 60 is configured to send indication information of at least one beam to a source access network device. The indication information of the at least one beam is used by at least one candidate access network device to determine a beam for sending a PDCCH to the terminal device, and the candidate access network device is an access network device configured by the source access network device in an RRC reconfiguration message of the terminal device.

In a possible implementation, each of the at least one beam meets any one of the following preset conditions:
the beam is a beam with optimal signal quality among beams measured by the terminal device; or
signal quality of the beam is greater than or equal to a reference threshold; or
signal quality of the beam is greater than or equal to signal quality of a reference beam, and the beam is different from the reference beam.

In a possible implementation, the transceiver 603 is further configured to receive measurement configuration information from the source access network device. The measurement configuration information indicates the terminal device to report indication information of a beam that meets the preset condition.

Optionally, the measurement configuration information includes indication information of the reference beam and/or the reference threshold.

Optionally, the measurement configuration information further includes an upper limit of a quantity of reported beams.

Optionally, the measurement configuration information is RRC layer measurement configuration information; or the measurement configuration information is physical layer measurement configuration information.

In a possible implementation, the indication information of the at least one beam includes an index of each of the at least one beam.

Optionally, the indication information of the at least one beam further includes a cell identifier corresponding to each of the at least one beam, and/or signal quality information of each of the at least one beam.

In a possible implementation, the transceiver 603 is further configured to receive an RRC reconfiguration message from the source access network device. The RRC reconfiguration message includes first indication information and cell information of the at least one candidate access network device, and the first indication information indicates the terminal device to perform a RACH-less handover.

In a possible implementation, the processor 601 is configured to trigger a handover to a target cell of a target access network device. The target access network device is one of the at least one candidate access network device. The processor 601 controls the transceiver 603 to monitor a PDCCH on a beam that belongs to the target cell in the at least one beam. The PDCCH indicates an uplink resource allocated to the terminal device.

In a possible implementation, the transceiver 603 is further configured to send indication information of at least one first beam to the source access network device.

Optionally, a beam indicated by the indication information of the at least one beam is different from a beam indicated by the indication information of the at least one first beam.

In another design, the communication apparatus 60 is configured to perform the method of the terminal device in the embodiment corresponding to FIG. 4 or FIG. 5. The transceiver 603 is configured to receive first indication information and resource configuration information. The first indication information indicates the terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, the third beam set includes at least one beam, and the fourth beam set includes at least one beam. The processor 601 is configured to determine, based on the resource configuration information, a target beam and/or an uplink resource corresponding to the target beam from at least one measured beam.

In a possible implementation, the resource configuration information includes indication information of the third beam set, information about a pre-allocated uplink resource corresponding to each beam in the third beam set, and indication information of the fourth beam set.

In a possible implementation, the processor 601 is specifically configured to: if it is determined that at least one measured beam in the candidate cell belongs to the third beam set, determine one of the at least one beam as the target beam, and determine that a pre-allocated uplink resource corresponding to the target beam is the uplink resource corresponding to the target beam.

In a possible implementation, the processor 601 is specifically configured to: if at least one beam that is in the candidate cell and that is measured by the terminal device belongs to the fourth beam set, determine one of the at least one beam as the target beam, and monitor the PDCCH on the target beam. A dynamically allocated uplink resource indicated by the PDCCH is the uplink resource corresponding to the target beam.

In a possible implementation, the processor 601 is specifically configured to: if at least one beam that is in the candidate cell and that is measured by the terminal device belongs to the third beam set, and at least one measured beam in the candidate cell belongs to the fourth beam set, determine a beam in the third beam set as the target beam, and determine that a pre-allocated uplink resource corresponding to the target beam is the uplink resource corresponding to the target beam.

In a possible implementation, the resource configuration information further includes information about a random access channel RACH resource.

The processor 601 is specifically configured to: if at least one beam that is in the candidate cell and that is measured by the terminal device does not belong to the third beam set and does not belong to the fourth beam set, determine one of the at least one beam as the target beam, and trigger a random access channel procedure on the RACH resource.

In a possible implementation, the resource configuration information further includes second indication information, and the second indication information indicates the terminal device to preferentially use the pre-allocated uplink resource.

The processor 601 is specifically configured to: if at least one beam that is in the candidate cell and that is measured by the terminal device belongs to the third beam set, and at least one beam in the candidate cell belongs to the fourth beam set, determine one of the at least one beam that belongs to the third beam set as the target beam, and determine a pre-allocated uplink resource corresponding to the target beam as the uplink resource corresponding to the target beam.

In a possible implementation, the resource configuration information further includes third indication information, and the third indication information indicates the terminal device to preferentially obtain a dynamically allocated uplink resource by monitoring the PDCCH.

The processor 601 is specifically configured to: if at least one beam that is in the candidate cell and that is measured by the terminal device belongs to the third beam set, and at least one beam in the candidate cell belongs to the fourth beam set, determine one of the at least one beam that belongs to the fourth beam set as the target beam, and monitor the PDCCH on the target beam. A dynamically allocated uplink resource indicated by the PDCCH is the uplink resource corresponding to the target beam.

In a possible implementation, the resource configuration information further includes a first threshold corresponding to the pre-allocated uplink resource.

The processor 601 is specifically configured to determine a beam with signal quality greater than or equal to the first threshold in the at least one beam as the target beam.

In a possible implementation, the resource configuration information further includes a second threshold corresponding to the dynamically allocated uplink resource indicated by the PDCCH.

The processor 601 is specifically configured to determine a beam with signal quality greater than or equal to the second threshold in the at least one beam as the target beam.

In a possible implementation, the resource configuration information further includes a third threshold corresponding to each beam in the third beam set.

The processor 601 is specifically configured to determine a beam with signal quality greater than or equal to the third threshold corresponding to the beam in the at least one beam as the target beam.

In a possible implementation, the resource configuration information further includes a fourth threshold corresponding to each beam in the fourth beam set.

The processor 601 is specifically configured to determine a beam with signal quality greater than or equal to the fourth threshold corresponding to the beam in the at least one beam as the target beam.

In a possible implementation, the resource configuration information further includes information about a random access channel RACH resource.

The processor 601 is specifically configured to: determine a beam with optimal signal quality in the at least one measured beam in the candidate cell as the target beam; and
if the target beam belongs to the third beam set, determine that a pre-allocated uplink resource corresponding to the target beam is the uplink resource corresponding to the target beam; or
if the target beam belongs to the fourth beam set, monitor the PDCCH on the target beam, where a dynamically allocated uplink resource indicated by the PDCCH is the uplink resource corresponding to the target beam; or
if the target beam does not belong to the third beam set and does not belong to the fourth beam set, trigger a random access channel procedure on the target beam on the RACH resource.

It should be noted that for specific implementations and beneficial effects of this embodiment, refer to the method of the terminal device in the foregoing embodiments. Details are not described herein again.

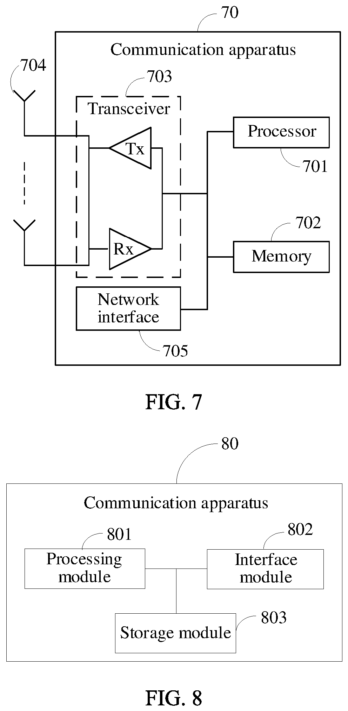

FIG. 7 is a diagram of a structure of another communication apparatus 70 according to an embodiment. It should be understood that the access network device (for example, the source access network device, the candidate access network device, or the target access network device) in the method embodiment corresponding to FIG. 2, FIG. 3, FIG. 4, or FIG. 5 may be based on the structure of the communication apparatus 70 shown in FIG. 7 in this embodiment.

The communication apparatus 70 includes at least one processor 701, at least one memory 702, at least one transceiver 703, at least one network interface 705, and one or more antennas 704. The processor 701, the memory 702, the transceiver 703, and the network interface 705 are connected through a connection apparatus, and the antenna 704 is connected to the transceiver 703. The connection apparatus may include various types of interfaces, transmission cables, buses, or the like. This is not limited in this embodiment.

The memory 702 is mainly configured to store a software program and data. The memory 702 may exist independently, and is connected to the processor 701. Optionally, the memory 702 may be integrated with the processor 701, for example, integrated into one or more chips. The memory 702 can store program code for executing the technical solutions in embodiments of this application, and the processor 701 controls execution. Various types of executed computer program code may also be considered as drivers of the processor 701. It should be understood that FIG. 7 in this embodiment shows only one memory and one processor. However, during actual application, the communication apparatus 70 may include a plurality of processor or a plurality of memory. This is not specifically limited herein. In addition, the memory 702 may also be referred to as a storage medium, a storage device, or the like. The memory 702 may be a storage element (namely, an on-chip storage element) located on the same chip as the processor, or an independent storage element. This is not limited in embodiments of this application.

In this embodiment, the transceiver 703 may be configured to support receiving or sending of a radio frequency signal between the communication apparatus 70 and a terminal device, and the transceiver 703 may be connected to the antenna 704. The transceiver 703 includes a transmitter Tx and a receiver Rx. Specifically, the one or more antennas 704 may receive the radio frequency signal. The receiver Rx in the transceiver 703 is configured to: receive the radio frequency signal from the antenna 704, convert the radio frequency signal into a digital baseband signal or a digital intermediate frequency signal, and provide the digital baseband signal or the digital intermediate frequency signal for the processor 701, so that the processor 701 further processes the digital baseband signal or the digital intermediate frequency signal, for example, performs demodulation processing and decoding processing. In addition, the transmitter Tx in the transceiver 703 is further configured to: receive a modulated digital baseband signal or digital intermediate frequency signal from the processor 701, convert the modulated digital baseband signal or digital intermediate frequency signal into a radio frequency signal, and send the radio frequency signal through the one or more antennas 704. Specifically, the receiver Rx may selectively perform one or more levels of down-mixing processing and analog-to-digital conversion processing on the radio frequency signal to obtain the digital baseband signal or the digital intermediate-frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

It should be understood that the transceiver 703 may also be referred to as a transceiver unit, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

In addition, the processor 701 is mainly configured to: process a communication protocol and communication data, control the whole network device, execute a software program, and process data of the software program, for example, configured to support the communication apparatus 70 in performing an action described in the foregoing embodiments. The communication apparatus 70 may include a baseband processor and a central processing unit. The baseband processor is mainly configured to process a communication protocol and communication data. The central processing unit is mainly configured to control the whole communication apparatus 70, execute a software program, and process data of the software program. Functions of the baseband processor and the central processing unit may be integrated into the processor 701 in FIG. 7. Persons skilled in the art may understand that the baseband processor and the central processing unit each may be an independent processor, and are interconnected by using a technology such as a bus. Persons skilled in the art may understand that the communication apparatus 70 may include a plurality of baseband processors to adapt to different network standards, the communication apparatus 70 may include a plurality of central processing units to enhance a processing capability thereof, and components in the communication apparatus 70 may be connected through various buses. The baseband processor may also be referred to as a baseband processing circuit or a baseband processing chip. The central processing unit may also be referred to as a central processing circuit or a central processing chip. A function of processing the communication protocol and the communication data may be embedded into the processor, or may be stored in the memory in a form of a software program, and the processor performs software program to implement a baseband processing function.

In addition, the network interface 705 is configured to enable the communication apparatus 70 to connect to another communication apparatus through a communication link. Specifically, the network interface 705 may include a network interface between the communication apparatus 70 and a core network element, for example, an S1 interface. Alternatively, the network interface 705 may include a network interface between the communication apparatus 70 and another network device (for example, another access network device or a core network element), for example, an X2 interface or an Xn interface.

In a design, the communication apparatus 70 is configured to perform the method of the source access network device in the embodiment corresponding to FIG. 2 or FIG. 3. The transceiver 703 is configured to: send a handover request message to at least one candidate access network device; receive a handover request acknowledgement message from the at least one candidate access network device; and send, to the at least one candidate access network device, indication information of at least one beam measured by the terminal device.

The indication information of the at least one beam is used by the at least one candidate access network device to determine a beam for sending a physical downlink control channel PDCCH to the terminal device.

In a possible implementation, each of the at least one beam meets any one of the following preset conditions:
the beam is a beam with optimal signal quality among beams measured by the terminal device; or
signal quality of the beam is greater than or equal to a reference threshold; or
signal quality of the beam is greater than or equal to signal quality of a reference beam, and the beam is different from the reference beam.

In a possible implementation, the transceiver 703 is further configured to: send measurement configuration information to the terminal device, where the measurement configuration information indicates the terminal device to report indication information of a beam that meets the preset condition; and receive the indication information of the at least one beam from the terminal device.

Optionally, the measurement configuration information includes indication information of the reference beam and/or the reference threshold.

Optionally, the measurement configuration information further includes an upper limit of a quantity of reported beams.

Optionally, the measurement configuration information is RRC layer measurement configuration information; or the measurement configuration information is physical layer measurement configuration information.

In a possible implementation, the indication information of the at least one beam includes an index of each of the at least one beam.

In a possible implementation, the indication information of the at least one beam further includes a cell identifier corresponding to each of the at least one beam, and/or signal quality information of each of the at least one beam.

In a possible implementation, the transceiver 703 is further configured to send a radio resource control RRC reconfiguration message to the terminal device. The RRC reconfiguration message includes first indication information and indication information of a cell of the at least one candidate access network device, and the first indication information indicates the terminal device to perform a random access channel less RACH-less handover.

In a possible implementation, the handover request message includes indication information of at least one first beam measured by the terminal device.

In a possible implementation, a beam indicated by the indication information of the at least one beam is different from a beam indicated by the indication information of the at least one first beam.

In a possible implementation, the reference beam is a beam determined by the source access network device based on the indication information of the at least one first beam.

In another design, the communication apparatus 70 is configured to perform the method of the candidate access network device in the embodiment corresponding to FIG. 2 or FIG. 3. The transceiver 703 is configured to: receive a handover request message from a source access network device; send a handover request acknowledgement message to the source access network device; and receive, from the source access network device, indication information of at least one beam measured by the terminal device. The processor 701 is configured to send a PDCCH to a terminal device based on the indication information of the at least one beam.

In a possible implementation, the terminal device is a terminal device that performs a RACH-less handover.

In a possible implementation, the processor 701 is specifically configured to send the PDCCH through a beam that is in a cell that belongs to the candidate access network device and that is in the indication information of the at least one beam. The PDCCH indicates an uplink resource allocated to the terminal device.

In a possible implementation, the indication information of the at least one beam includes an index of each of the at least one beam.

Optionally, the indication information of the at least one beam further includes a cell identifier corresponding to each of the at least one beam, and/or signal quality information of each of the at least one beam.

In a possible implementation, the handover request message includes indication information of at least one first beam measured by the terminal device.

In a possible implementation, a beam indicated by the indication information of the at least one beam is different from a beam indicated by the indication information of the at least one first beam.

In another design, the communication apparatus 70 is configured to perform the method of the candidate access network device in the embodiment corresponding to FIG. 4 or FIG. 5. The transceiver 703 in the communication apparatus 70 is configured to send first indication information and resource configuration information. The first indication information indicates a terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, the third beam set includes at least one beam, and the fourth beam set includes at least one beam.

In a possible implementation, the resource configuration information includes indication information of the third beam set, information about a pre-allocated uplink resource corresponding to each beam in the third beam set, and indication information of the fourth beam set.

In a possible implementation, the resource configuration information further includes information about a random access channel RACH resource.

In a possible implementation, the resource configuration information further includes a first threshold corresponding to the pre-allocated uplink resource, and/or a second threshold corresponding to the dynamically allocated uplink resource indicated by the PDCCH.

In a possible implementation, the resource configuration information further includes a third threshold corresponding to each beam in the third beam set and/or a fourth threshold corresponding to each beam in the fourth beam set.

In a possible implementation, the resource configuration information further includes second indication information, and the second indication information indicates the terminal device to preferentially use the pre-allocated uplink resource.

In a possible implementation, the resource configuration information further includes third indication information, and the third indication information indicates the terminal device to preferentially obtain a dynamically allocated uplink resource by monitoring the PDCCH.

In a possible implementation, the transceiver 703 is further configured to receive the beam-level measurement result measured by the terminal device. The beam-level measurement result includes the indication information of the at least one beam. The processor 701 is further configured to determine indication information of a third beam set and/or indication information of a fourth beam set based on the beam-level measurement result.

In another design, the communication apparatus 70 is configured to perform the method of the source access network device in the embodiment corresponding to FIG. 4 or FIG. 5. The transceiver 703 in the communication apparatus 70 is configured to send a handover request message to at least one candidate access network device. The handover request message includes a beam-level measurement result measured by the terminal device, and the beam-level measurement result includes indication information of at least one beam.

Optionally, the indication information of the at least one beam includes an index of each of the at least one beam.

Optionally, the indication information of the at least one beam further includes a cell identifier corresponding to each of the at least one beam.

Optionally, the indication information of the at least one beam further includes signal quality information of each of the at least one beam.

In a possible implementation, the transceiver 703 is configured to receive a handover request acknowledgement message from the candidate access network device. The handover request acknowledgement message includes first indication information and resource configuration information, the first indication information indicates a terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, the third beam set includes at least one beam, and the fourth beam set includes at least one beam.

In a possible implementation, the transceiver 703 is configured to send an RRC reconfiguration message to the terminal device. The RRC reconfiguration message includes the first indication information and the resource configuration information.

It should be noted that for specific implementations and beneficial effects of this embodiment, refer to the method of the access network device in the foregoing embodiments. Details are not described herein again.

As shown in FIG. 8, this application further provides a communication apparatus 80. The communication apparatus 80 may be a terminal device or an access network device, or may be a component (for example, an integrated circuit or a chip) in the terminal device or the access network device. The access network device may be a source access network device, a candidate access network device, or a target access network device. The communication apparatus 80 may alternatively be another communication module configured to implement the method in the method embodiments of this application.

The communication apparatus 80 may include a processing module 801 (or referred to as a processing unit). Optionally, the communication apparatus 80 may further include an interface module 802 (or referred to as a transceiver unit or a transceiver module) and a storage module 803 (or referred to as a storage unit). The interface module 802 is configured to communicate with another device. The interface module 802 may be, for example, a transceiver module or an input/output module.

In a possible design, one or more modules in FIG. 8 may be implemented by one or more processors, may be implemented by one or more processors and memories, may be implemented by one or more processors and transceivers, or may be implemented by one or more processors, memories, and transceivers. This is not limited in embodiments of this application. The processor, the memory, and the transceiver may be disposed separately or may be integrated.

The communication apparatus 80 has functions of implementing the terminal device described in embodiments of this application. For example, the communication apparatus 80 includes a module, a unit, or a means (means) corresponding to a terminal device performing the steps related to the terminal device described in embodiments of this application. The function, the unit, or the means (means) may be implemented by software or hardware, or may be implemented by hardware executing corresponding software, or may be implemented by a combination of software and hardware. For details, further refer to corresponding descriptions in the foregoing corresponding method embodiments. For details, refer to the communication apparatus 60 in the embodiment corresponding to FIG. 6.

Alternatively, the communication apparatus 80 has functions of implementing the access network device described in embodiments of this application. For example, the communication apparatus 80 includes a module, a unit, or a means (means) corresponding to an access network device performing the steps related to the access network device described in embodiments of this application. The function, the unit, or the means (means) may be implemented by software or hardware, or may be implemented by hardware executing corresponding software, or may be implemented by a combination of software and hardware. For details, further refer to corresponding descriptions in the foregoing corresponding method embodiments. For details, refer to the communication apparatus 70 in the embodiment corresponding to FIG. 7.

In addition, this application provides a computer program product. The computer program product includes one or more computer instructions. When the computer program instructions are loaded and executed on a computer, all or some of the procedures or functions according to embodiments of this application are generated. For example, the method related to the access network device (the source access network device or the candidate access network device) in FIG. 2, FIG. 3, FIG. 4, or FIG. 5 is implemented. For another example, the method related to the terminal device in FIG. 2, FIG. 3, FIG. 4, or FIG. 5 is implemented. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the access network device in FIG. 2, FIG. 3, FIG. 4, or FIG. 5.

In addition, this application further provides a computer-readable storage medium. The storage medium stores a computer program, and the computer program is executed by a processor to implement the method related to the terminal device in FIG. 2, FIG. 3, FIG. 4, or FIG. 5.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the spirit and the scope of the technical solutions of embodiments of this application.

## Claims

1. A communication method, comprising:
sending, by a source access network device, a handover request message to at least one candidate access network device;
receiving, by the source access network device, a handover request acknowledgement message from the at least one candidate access network device; and
sending, by the source access network device to the at least one candidate access network device, indication information of at least one beam measured by a terminal device.

2. The method according to claim 1, wherein the indication information of the at least one beam is used by the at least one candidate access network device to determine a beam for sending a physical downlink control channel PDCCH to the terminal device.

3. The method according to claim 1 or 2, wherein each of the at least one beam meets any one of the following preset conditions:
the beam is a beam with optimal signal quality among beams measured by the terminal device; or
signal quality of the beam is greater than or equal to a reference threshold; or
signal quality of the beam is greater than or equal to signal quality of a reference beam, and the beam is different from the reference beam.

4. The method according to claim 3, wherein the method further comprises:
sending, by the source access network device, measurement configuration information to the terminal device, wherein the measurement configuration information indicates the terminal device to report indication information of a beam that meets the preset condition; and
receiving, by the source access network device, the indication information of the at least one beam from the terminal device.

5. The method according to claim 4, wherein the measurement configuration information comprises indication information of the reference beam and/or the reference threshold.

6. The method according to claim 5, wherein the measurement configuration information further comprises an upper limit of a quantity of reported beams.

7. The method according to any one of claims 1 to 6, wherein the indication information of the at least one beam comprises an index of each of the at least one beam.

8. The method according to claim 7, wherein the indication information of the at least one beam further comprises a cell identifier corresponding to each of the at least one beam, and/or signal quality information of each of the at least one beam.

9. The method according to any one of claims 1 to 8, wherein the measurement configuration information is radio resource control RRC layer measurement configuration information; or the measurement configuration information is physical layer measurement configuration information.

10. The method according to any one of claims 1 to 9, wherein the method further comprises:
sending, by the source access network device, an RRC reconfiguration message to the terminal device, wherein the RRC reconfiguration message comprises first indication information and indication information of a cell of the at least one candidate access network device, and the first indication information indicates the terminal device to perform a random access channel less RACH-less handover.

11. The method according to any one of claims 1 to 10, wherein the handover request message comprises indication information of at least one first beam measured by the terminal device.

12. The method according to claim 11, wherein a beam indicated by the indication information of the at least one beam is different from a beam indicated by the indication information of the at least one first beam.

13. The method according to claim 11 or 12, wherein the reference beam is a beam determined by the source access network device based on the indication information of the at least one first beam.

14. A communication method, comprising:
sending, by a terminal device, indication information of at least one beam to a source access network device, wherein the indication information of the at least one beam is used by at least one candidate access network device to determine a beam for sending a PDCCH to the terminal device, and the candidate access network device is an access network device configured by the source access network device in an RRC reconfiguration message of the terminal device.

15. The method according to claim 14, wherein each of the at least one beam meets any one of the following preset conditions:
the beam is a beam with optimal signal quality among beams measured by the terminal device; or
signal quality of the beam is greater than or equal to a reference threshold; or
signal quality of the beam is greater than or equal to signal quality of a reference beam, and the beam is different from the reference beam.

16. The method according to claim 15, wherein the method further comprises:
receiving, by the terminal device, measurement configuration information from the source access network device, wherein the measurement configuration information indicates the terminal device to report indication information of a beam that meets the preset condition.

17. The method according to claim 16, wherein the measurement configuration information comprises indication information of the reference beam and/or the reference threshold.

18. The method according to claim 17, wherein the measurement configuration information further comprises an upper limit of a quantity of reported beams.

19. The method according to any one of claims 14 to 18, wherein the indication information of the at least one beam comprises an index of each of the at least one beam.

20. The method according to claim 19, wherein the indication information of the at least one beam further comprises a cell identifier corresponding to each of the at least one beam, and/or signal quality information of each of the at least one beam.

21. The method according to any one of claims 14 to 20, wherein the measurement configuration information is RRC layer measurement configuration information; or the measurement configuration information is physical layer measurement configuration information.

22. The method according to any one of claims 14 to 21, wherein the method further comprises:
receiving, by the terminal device, an RRC reconfiguration message from the source access network device, wherein the RRC reconfiguration message comprises first indication information and cell information of the at least one candidate access network device, and the first indication information indicates the terminal device to perform a RACH-less handover.

23. The method according to claim 22, wherein the method further comprises:
triggering, by the terminal device, a handover to a target cell of a target access network device, wherein the target access network device is one of the at least one candidate access network device; and
monitoring, by the terminal device, a PDCCH on a beam that belongs to the target cell in the at least one beam, wherein the PDCCH indicates an uplink resource allocated to the terminal device.

24. The method according to any one of claims 14 to 23, wherein before sending, by the terminal device, the indication information of the at least one beam to the source access network device, the method further comprises:
sending, by the terminal device, indication information of at least one first beam to the source access network device.

25. The method according to claim 24, wherein a beam indicated by the indication information of the at least one beam is different from a beam indicated by the indication information of the at least one first beam.

26. A communication method, comprising:
receiving, by a candidate access network device, a handover request message from a source access network device;
sending, by the candidate access network device, a handover request acknowledgement message to the source access network device;
receiving, by the candidate access network device from the source access network device, indication information of at least one beam measured by a terminal device; and
sending, by the candidate access network device, a PDCCH to the terminal device based on the indication information of the at least one beam.

27. A communication method, comprising:
receiving, by a terminal device, first indication information and resource configuration information, wherein the first indication information indicates the terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, to obtain an uplink resource, the third beam set comprises at least one beam, and the fourth beam set comprises at least one beam; and
determining, by the terminal device based on the resource configuration information, a target beam and/or an uplink resource corresponding to the target beam from at least one measured beam.

28. The method according to claim 27, wherein the resource configuration information comprises indication information of the third beam set, information about a pre-allocated uplink resource corresponding to each beam in the third beam set, and indication information of the fourth beam set.

29. The method according to claim 28, wherein determining, by the terminal device based on the resource configuration information, the target beam and/or the uplink resource corresponding to the target beam from the at least one measured beam comprises:
if at least one beam that is in the candidate cell and that is measured by the terminal device belongs to the third beam set, determining, by the terminal device, one of the at least one beam as the target beam, and determining that a pre-allocated uplink resource corresponding to the target beam is the uplink resource corresponding to the target beam.

30. The method according to claim 28, wherein determining, by the terminal device based on the resource configuration information, the target beam and/or the uplink resource corresponding to the target beam from the at least one measured beam comprises:
if at least one beam that is in the candidate cell and that is measured by the terminal device belongs to the fourth beam set, determining, by the terminal device, one of the at least one beam as the target beam, and monitoring the PDCCH on the target beam, wherein a dynamically allocated uplink resource indicated by the PDCCH is the uplink resource corresponding to the target beam.

31. The method according to claim 28, wherein determining, by the terminal device based on the resource configuration information, the target beam and/or the uplink resource corresponding to the target beam from the at least one measured beam comprises:
if at least one beam that is in the candidate cell and that is measured by the terminal device belongs to the third beam set, and at least one beam that is in the candidate cell and that is measured by the terminal device belongs to the fourth beam set, determining, by the terminal device, a beam in the third beam set as the target beam, and determining that a pre-allocated uplink resource corresponding to the target beam is the uplink resource corresponding to the target beam.

32. The method according to claim 31, wherein the resource configuration information further comprises information about a random access channel RACH resource; and
determining, by the terminal device based on the resource configuration information, the target beam and/or the uplink resource corresponding to the target beam from the at least one measured beam comprises:
if at least one beam that is in the candidate cell and that is measured by the terminal device does not belong to the third beam set and does not belong to the fourth beam set, determining, by the terminal device, one of the at least one beam as the target beam, and triggering a random access channel procedure on the RACH resource.

33. The method according to claim 28, wherein the resource configuration information further comprises second indication information, and the second indication information indicates the terminal device to preferentially use the pre-allocated uplink resource; and
determining, by the terminal device based on the resource configuration information, the target beam and/or the uplink resource corresponding to the target beam from the at least one measured beam comprises:
if at least one beam that is in the candidate cell and that is measured by the terminal device belongs to the third beam set, and at least one beam in the candidate cell belongs to the fourth beam set, determining, by the terminal device, one of the at least one beam that belongs to the third beam set as the target beam, and determining that a pre-allocated uplink resource corresponding to the target beam is the uplink resource corresponding to the target beam.

34. The method according to claim 28, wherein the resource configuration information further comprises third indication information, and the third indication information indicates the terminal device to preferentially obtain a dynamically allocated uplink resource by monitoring the PDCCH; and
determining, by the terminal device based on the resource configuration information, the target beam and/or the uplink resource corresponding to the target beam from the at least one measured beam comprises:
if at least one beam that is in the candidate cell and that is measured by the terminal device belongs to the third beam set, and at least one beam in the candidate cell belongs to the fourth beam set, determining, by the terminal device, one of the at least one beam that belongs to the fourth beam set as the target beam, and monitoring the PDCCH on the target beam, wherein a dynamically allocated uplink resource indicated by the PDCCH is the uplink resource corresponding to the target beam.

35. The method according to claim 29, 31, or 33, wherein the resource configuration information further comprises a first threshold corresponding to the pre-allocated uplink resource; and
determining, by the terminal device, one of the at least one beam as the target beam comprises:
determining, by the terminal device, a beam with signal quality greater than or equal to the first threshold in the at least one beam as the target beam.

36. The method according to claim 30 or 34, wherein the resource configuration information further comprises a second threshold corresponding to the dynamically allocated uplink resource indicated by the PDCCH; and
determining, by the terminal device, one of the at least one beam as the target beam comprises:
determining, by the terminal device, a beam with signal quality greater than or equal to the second threshold in the at least one beam as the target beam.

37. The method according to claim 29, 31, or 33, wherein the resource configuration information further comprises a third threshold corresponding to each beam in the third beam set; and
determining, by the terminal device, one of the at least one beam as the target beam comprises:
determining, by the terminal device, a beam with signal quality greater than or equal to a third threshold corresponding to the beam in the at least one beam as the target beam.

38. The method according to claim 30 or 34, wherein the resource configuration information further comprises a fourth threshold corresponding to each beam in the fourth beam set; and
determining, by the terminal device, one of the at least one beam as the target beam comprises:
determining, by the terminal device, a beam with signal quality greater than or equal to a fourth threshold corresponding to the beam in the at least one beam as the target beam.

39. The method according to claim 28, wherein the resource configuration information further comprises information about a random access channel RACH resource; and
determining, by the terminal device based on the resource configuration information, the target beam and/or the uplink resource corresponding to the target beam from the at least one measured beam comprises:
determining, by the terminal device, a beam with optimal signal quality in the at least one measured beam in the candidate cell as the target beam; and
if the target beam belongs to the third beam set, determining, by the terminal device, that a pre-allocated uplink resource corresponding to the target beam is the uplink resource corresponding to the target beam; or
if the target beam belongs to the fourth beam set, monitoring, by the terminal device, the PDCCH on the target beam, wherein a dynamically allocated uplink resource indicated by the PDCCH is the uplink resource corresponding to the target beam; or
if the target beam does not belong to the third beam set and does not belong to the fourth beam set, triggering, by the terminal device, a random access channel procedure on the target beam on the RACH resource.

40. A communication method, comprising:
sending, by a candidate access network device, first indication information and resource configuration information, wherein the first indication information indicates the terminal device to perform a random access channel less RACH-less handover, the resource configuration information indicates a pre-allocated uplink resource of a third beam set of a candidate cell, and indicates to monitor a PDCCH on a beam in a fourth beam set of the candidate cell, the third beam set comprises at least one beam, and the fourth beam set comprises at least one beam.

41. A communication apparatus, comprising a processor and a memory, wherein
the memory stores a computer program; and
the processor invokes the computer program, so that the communication apparatus performs the method of the source access network device according to any one of claims 1 to 13.

42. A communication apparatus, comprising a processor and a memory, wherein
the memory stores a computer program; and
the processor invokes the computer program, so that the communication apparatus performs the method of the terminal device according to any one of claims 14 to 25, or performs the method of the terminal device according to any one of claims 27 to 39.

43. A communication apparatus, comprising a processor and a memory, wherein
the memory stores a computer program; and
the processor invokes the computer program, so that the communication apparatus performs the method of the candidate access network device according to claim 26 or 40.

44. A computer-readable storage medium, storing instructions, wherein when the instructions are run on a computer, the computer is enabled to perform the method according to any one of claims 1 to 13, or perform the method according to any one of claims 14 to 25, or perform the method according to any one of claims 27 to 39, or perform the method according to claim 26 or 40.
